(19) Europäisches Patentamt
European Patent Office
Office européen des brevets

(11) Publication number: 0 210 615
B1

(12) # EUROPEAN PATENT SPECIFICATION

(45) Date of publication of the patent specification: 14.11.90

(51) Int. Cl.⁵: **C08F 12/04**, C08F 30/02, C08F 30/08

(21) Application number: 86110324.0

(22) Date of filing: 26.07.86

(54) **Styrene polymers.**

(30) Priority: 29.07.85 JP 165881/85
06.05.86 JP 101926/86

(43) Date of publication of application: 04.02.87 Bulletin 87/6

(45) Publication of the grant of the patent: 14.11.90 Bulletin 90/46

(84) Designated Contracting States: BE CH DE FR GB IT LI NL SE

(56) References cited: GB-A- 991 703

(73) Proprietor: IDEMITSU KOSAN COMPANY LIMITED, No. 1-1, 3-chome, Marunouchi Chiyoda-ku, Tokyo(JP)

(72) Inventor: Ishihara, Nobuhide, No. 1660, Kamiizumi Sodegaura-machi, Kimitsu-gun Chiba-ken(JP)
Inventor: Kuramoto, Masahiko, No. 1218-2, Kamiizumi Sodegaura-machi, Kimitsu-gun Chiba-ken(JP)
Inventor: Uoi, Michitake, No. 5336-40, Goi, Ichihara-shi Chiba-ken(JP)

(74) Representative: Türk, Dietmar, Dr. rer. nat. et al, Türk, Gille + Hrabal Patentanwälte Brucknerstrasse 20, D-4000 Düsseldorf 13(DE)

EP 0 210 615 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

BACKGROUND OF THE INVENTION

The present invention relates to styrene polymers having a new stereoregular structure and more particularly to styrene polymers in which the stereoregular structure of side chains relative to the polymer main chain is higlhy syndiotactic.

As is well known, styrene polymers such as polystyrene and polyparamethylstyrene are generally produced by techniques such as radical polymerization, anionic polymerization, cationic polymerization and polymerization using a Ziegler-type catalyst. These styrene polymers are divided into three groups, isotactic, syndiotactic and atactic polymers, depending on the steric configuration of the side chains thereof. It has heretofore been known that usual radical, anionic and cationic polymerization methods provide styrene polymers having mainly an atactic structure, and that the polymerization methods using a Ziegler-type catalyst provide styrene polymers having mainly an isotactic structure.

A number of methods of preparing styrene polymers and their structures have been reported. However, preparation of styrene polymers of high syndiotactic structure (excluding such model substances as trimers to pentamers prepared by organic chemical preparation techniques) has not yet been reported.

SUMMARY OF THE INVENTION

The present invention is intended to provide styrene polymers having a high syndiotactic structure. As a result of extensive investigations, it has been found that polymerization of styrene monomers in the presence of a catalyst comprising specific transition metal compounds and organometallic compounds results in styrene polymers of high syndiotactic structure.

The present invention relates to a styrene polymer having a high syndiotactic structure and having a repeating unit represented by the general formula (I):

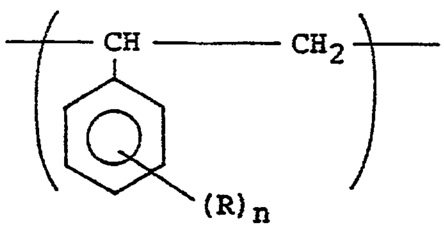

...... (I)

(wherein R represents a hydrogen atom, a halogen atom or a substituent containing a carbon atom, an oxygen atom, a nitrogen atom, a sulfur atom, a phosphorus atom or a silicon atom, and n represents an integer of 1 to 3), and a degree of polymerization of not less than 5. Furthermore, the present invention relates to the process for preparing styrene polymers, which comprises polymerizing styrene or styrene derivatives by the use of a catalyst comprising:

A) cyclopentadienyltitaniumtrichloride, and

B) methylaluminoxane derived from the reaction of trimethyl aluminium and water.

BRIEF DESCRIPTION OF THE DRAWINGS

Fig. 1 shows $^{13}C$–NMR spectra (aromatic ring $C_1$ carbon signals) of styrene polymers produced in examples: (a) indicates polystyrene produced in Example 1, (b) indicates, atactic polystyrene produced in Comparative Example 1, (c) indicates isotactic polystyrene produced in Comparative

Example 2, (d) indicates poly(p-methylstyrene) produced in Example 23, (e) indicates poly(m-methylstyrene) produced in Example 24, (f) indicates poly(p-tert-butylstyrene) produced in Example 25, (g) indicates poly(p-chlorostyrene) produced in Example 26, (h) indicates atactic poly(p-chlorostyrene) produced commercially, (i) indicates poly(m-chlorostyrene) produced in Example 27, and (j) indicates poly(p-fluorostyrene) produced in Example 28;

Fig. 2 shows $^{13}C$-NMR spectra (methine methylene carbon signals) of styrene polymers produced in examples: (a) indicates polystyrene produced in Example 1, (b) indicates atactic polystyrene produced in Comparative Example 1, (c) indicates isotactic polystyrene produced in Comparative Example 2, and (d) indicates poly(p-methylstyrene) produced in Example 23;

Fig. 3 shows $^1H$-NMR spectra of styrene polymers produced in examples: (a) indicates polystyrene produced in Example 1, (b) indicates isotactic polystyrene produced in Comparative Example 2, and (c) indicates poly(p-methylstyrene) produced in Example 23;

Fig. 4 shows X-ray diffraction patterns of styrene polymers produced in examples: (a) indicates polystyrene produced in Example 1, (b) indicates isotactic polystyrene produced in Comparative Example 2 and (c) indicates poly(p-methylstyrene) produced in Example 23; and

Fig. 5 shows infrared absorption spectra of styrene polymers produced in examples: (a) indicates polystyrene produced in Example 1, (b) indicates atactic polystyrene produced in Comparative Example 1, (c) indicates isotactic polystyrene produced in Comparative Example 2, and (d) indicates poly(p-methylstyrene) produced in Example 23.

In Fig. 4, the symbol θ indicates a Bragg angle (°).

## DETAILED DESCRIPTION OF THE INVENTION

The styrene polymers of the present invention have a structure unit (repeating unit) represented by the above general formula (I) and include, as well as polystyrene, various nucleus-substituted polystyrenes such as poly(alkylstyrene) and poly(halogenated styrene).

The general formula (I) will hereinafter be described in detail.

R represents a hydrogen atom, a halogen atom such as chlorine, bromine and iodine, or a substituent containing a carbon atom, an oxygen atom, a nitrogen atom, a sulfur atom, a phosphorus atom, or a silicon atom.

Representative examples of the carbon atom-containing substituent are an alkyl group having 1 to 20 carbon atoms (e.g., a methyl group, an ethyl group, an isopropyl group and a tert-butyl group), and a halogen-substituted alkyl group (e.g., a chloromethyl group, a bromomethyl group and a chloroethyl group). Representative examples of the carbon atom and oxygen atom-containing substituent are an alkoxyl group having 1 to 10 carbon atoms (e.g., a methoxy group, an ethoxy group and an isopropoxy group), and a carboxyester having 1 to 10 carbon atoms (e.g., a carboxymethylester group and a carboxyethylester group). Representative examples of the carbon atom and silicon atom-containing substituent are an alkylsilyl group (e.g., a trimethylsilyl group). Representative examples of the carbon atom and nitrogen atom-containing substituent are an alkylamino group having 1 to 20 carbon atoms (e.g., a dimethylamino group), and a cyano group. Representative examples of the sulfur atom-containing substituent are a sulfonyl group, a sulfonic acid alkyl ester group, an alkylthio group and a mercapto group. Representative examples of the phosphorus atom-containing substituent are a phosphoric acid ester group, a phosphorous acid ester group and an alkylphosphinyl group.

Representative examples of the styrene polymers of the present invention are polystyrene; poly(alkylstyrene) such as poly(p-methylstyrene), poly(m-methylstyrene), poly(o-methylstyrene), poly(2,4-dimethylstyrene), poly(2,5-dimethylstyrene), poly(3,4-dimethylstyrene), poly(3,5-dimethylstyrene) and poly(p-tert-butylstyrene); poly(halogenated styrene) such as poly(p-chlorostyrene), poly(m-chlorostyrene), poly(o-chlorostyrene), poly(p-bromostyrene), poly(m-bromo-styrene), poly(o-bromostyrene), poly(p-fluorostyrene), poly(m-fluorostyrene), poly(o-fluorostyrene) and poly(o-methyl-p-fluorostyrene); poly(halogen-substituted alkylstyrene) such as poly(p-chloromethylstyrene), poly(m-chloromethylstyrene) and poly(o-chloromethylstyrene); poly(alkoxystyrene) such as poly(p-methoxystyrene), poly(m-methoxystyrene, poly(o-methoxystyrene) poly(p-ethoxystyrene), poly(m-ethoxystyrene) and poly(o-ethoxystyrene); poly(carboxyesterstyrene) such as poly(p-carboxymethylstyrene), poly(m-carboxymethylstyrene) and poly(o-carboxymethylstyrene); poly(alkyletherstyrene) such as poly(p-vinylbenzylpropylether); poly(alkylsilylstyrene) such as poly(p-trimethylsilylstyrene); poly(ethyl vinylbenzenesulfonate); and poly(vinylbenzyldimethoxyphosphide).

The stereoregular structure of the styrene polymers of the present invention is mainly syndiotactic; that is, the styrene polymers of the present invention have such a steric configuration that phenyl groups or substituted phenyl groups as side chains are positioned alternately in the opposite sides in relation to the main chain comprising a carbon-carbon bond. The tacticity of the styrene polymers is determined by the nuclear magnetic resonance (NMR) method. In more detail, the tacticity of the styrene polymers is determined by analysizing the signal of $C_1$ carbon of an aromatic ring and the signal of methine•methylene carbon in $^{13}$NMR (nuclear magnetic resonance spectrum as measured using an isometric carbon), or the proton signal of $^{1}$H-NMR. The tacticity can be determined by NMR for each given number of constituting units connected continuously, such as a diad in which the number of constituting units is two, a triad in which the number of constituting units is three, and a pentad in which the number of constituting units is five. The term "polymer having mainly a syndiotactic structure" as used herein means that the polymer has such a syndiotactic structure that the syndiotacticity expressed in terms of the diad is not less than 85%, or the syndiotacticity expressed in terms of the pentad is not less than 50%. However, a degree of syndiotacticity which have been able to be obtained somewhat varies depending on the presence and type of the substituent. Thus, styrene polymers not always satisfying the above-defined value ranges fall within the scope of the styrene polymer having mainly a syndiotactic structure. In more detail, the styrene polymer having mainly a syndiotactic structure of the present invention includes the following polymers:

polystyrene in which the syndiotacticity expressed in terms of the diad is not less than 75%, or the syndiotacticity expressed in terms of the pentad is not less than 30%;

poly(p-methylstyrene) in which the syndiotacticity expressed in terms of the diad is not less than 75%, or the syndiotacticity expressed in terms of the pentad is not less than 30%;

poly(m-methylstyrene) in which the syndiotacticity expressed in terms of the diad is not less than 75%, or the syndiotacticity expressed in terms of the pentad is not less than 35%;
poly(o-methylstyrene) in which the syndiotacticity expressed in terms of the diad is not less than 85%, or the syndiotacticity expressed in terms of the pentad is not less than 30%;
poly(o-methoxystyrene) in which the syndiotacticity expressed in terms of the diad is not less than 80%, or the syndiotacticity expressed in terms of the pentad is not less than 40%, and
poly(p-methoxystyrene) in which the syndiotacticity expressed in terms of the diad is not less than 75%, or the syndiotacticity expressed in terms of the pentad is not less than 30%;

The styrene polymer having mainly a syndiotactic structure of the present invention is not always required to be a single compound. Mixtures of the styrene polymers of the present invention and styrene polymers having an isotactic or atactic structure, and copolymers with the styrene polymers of the present invention incorporated in the chain thereof are included in the scope of the present invention as long as their syndiotacticity falls within the above-defined range. In addition, the styrene polymers of the present invention may be mixtures of styrene polymers having different molecular weights.

The styrene polymers of the present invention have a degree of polymerization of not less than 5, preferably not less than 10.

The styrene polymers of the present invention, having the desired stereoregularity and substituent can be produced by polymerizing the corresponding manomers, or by applying treatment such as fractionation, blending and organic preparation techniques to polymers produced.

The styrene polymers of the present invention can be produced by polymerizing styrene monomers such as styrene and styrene derivatives, e.g., alkylstyrene and halogenated styrene in the presence of a catalyst comprising a titanium compound, e.g., titanium halide and alkoxytitanium, and an organoaluminum compound, e.g., alkylaluminoxane. Styrene polymers produced by the above polymerization method have a high syndiotacticity which have not yet been obtained, without application of treatment such as fractionation. Application of fractionation treatment using a suitable solvent provides styrene polymers the syndiotacticity of which is nearly 100%. The styrene polymers of the present invention, having the desired tacticity can be produced by blending the above styrene polymers having a syndiotacticity of nearly 100% with atactic or isotactic styrene polymers by known techniques. It is well known that various substituents are introduced into aromatic rings of styrene polymers by organic chemical techniques such as chloromethylation. The styrene polymers having various substituents in the aromatic ring thereof of the present invention can be prepared by the above method using the styrene polymers of the present invention as a base polymer while maintaining the tacticity thereof.

The styrene polymers of the present invention have, as described above, a stereoregular molecular structure which conventional styrene polymers do not have. Styrene polymers undergoing crystallization are excellent in heat resistance and also in chemical resistance as compared with commonly used atactic polystyrene. Thus these styrene polymers can be used as materials for use in production of molded articles which are needed to have high heat resistance and chemical resistance. Styrene polymers in which a functional substituent is introduced in the benzene ring as a side chain can by widely used as functional polymers.

The present invention is described in greater detail with reference to the following examples. In these examples, the styrene polymers of the present invention were confirmed to have a syndiotactic structure.

EXAMPLE 1

(1) Preparation of Catalyst Component

Trimethylaluminum (47.4 milliliters (ml): 492 millimoles (mmol)) was added to 200 ml of toluene as a solvent, and then 35.5 grams (g) (142 mmol) of copper sulfate pentahydrate ($CuSO_4 \cdot 5H_2O$) was added thereto. These ingredients were reacted at 20°C for 24 hours. When the reaction was completed, the toluene solvent was removed by filtration to obtain 12.4 g of methylaluminoxane.

(2) Production of Polystyrene

A mixture of 100 ml of toluene and 40 mmol (calculated as an aluminum atom) of methylaluminoxane was placed in a glass vessel (internal volume: 500 ml) equipped with a stirrer, and then 0.05 mmol of cyclopentadienyltitanium trichloride was added thereto. Subsequently 180 ml of styrene was added at 20°C and polymerized for 1 hour. Then methanol was poured to terminate the polymerization reaction, and a mixture of hydrochloric acid and methanol was added to decompose the catalyst component.

The yield of polystyrene was 16.5 g. The polystyrene had a weight average molecular weight of 280,000 and a number average molecular weight of 57,000. The polystyrene was extracted with methyl ethyl ketone as a solvent for 4 hours by the use of a Soxhlet extractor. The insoluble solids content was 97 percent by weight (wt%). This methyl ethyl ketone-insoluble polystyrene had a melting point of 260°C and a specific gravity of 1.043.

In connection with the methyl ethyl ketone-insoluble polystyrene, a $^{13}C$-NMR spectrum (signal of $C_1$ carbon of the aromatic ring) is shown in Fig. 1 (indicated by the symbol (a)), a $^{13}C$-NMR spectrum (signal

of methine methylene carbon) is shown in Fig. 2 (indicated by the symbol (a)), a $^1$H-NMR spectrum (proton nuclear magnetic resonance spectrum) is shown in Fig. 3, (indicated by the symbol (a)), an X-ray diffraction pattern is shown in Fig. 4 (indicated by the symbol (a)), and an infrared absorption spectrum is shown in Fig. 5 (indicated by the symbol (a)).

COMPARATIVE EXAMPLE 1

Styrene was radical-polymerized at 0°C by the use of an organic peroxide to produce atactic polystyrene. This polystyrene was extracted with methyl ethyl ketone in the same manner as in Example 1 (2). It was found that the whole of the polystyrene was extracted. This polystyrene had a glass transition temperature of 100°C and a specific gravity of 1.05.

In connection with this atactic polystyrene, a $^{13}$C-NMR spectrum (signal of $C_1$ carbon of the aromatic ring) is shown in Fig. 1 (b), a $^{13}$C-NMR spectrum (signal of methine methylene carbon) is shown in Fig. 2 (b), and an infrared absorption spectrum is shown in Fig. 5 (b).

COMPARATIVE EXAMPLE 2

A titanium catalyst component with a titanium compound deposited thereon was prepared by reacting 10.0 g of magnesium diethoxide and 50 ml of titanium tetrachloride. Then 1.0 mmol of the titanium catalyst component thus prepared and 10 mmol of triethylaluminum were combined together to prepare a catalyst. Using this catalyst, 100 ml of styrene was polymerized in heptane as a solvent at 70°C for 2 hours to yield 48.7 g of isotactic polystyrene having a weight average molecular weight of 1,000,000. This polystyrene was extracted in the same manner as in Example 1 (2). The insoluble solids content was 96 wt%.

In connection with this methyl ethyl ketone-insoluble polystyrene, a $^{13}$C-NMR spectrum (signal of $C_1$ carbon of the aromatic ring) is shown in Fig. 1 (c), a $^{13}$C-NMR (signal of methine methylene carbon) is shown in Fig. 2 (c), a $^1$H-NMR spectrum is shown in Fig. 3 (b), a X-ray diffraction pattern is shown in Fig. 4 (b), and an infrared absorption spectrum is shown in Fig. 5 (c).

Based on the analytical data of the polystyrene obtained in Example 1 (2) and the analytical data of the atactic polystyrene obtained in Comparative Example 1, and the analytical data of the isotactic polystyrene obtained in Comparative Example 2, it was confirmed that the polystyrene of Example 1 (2) had a syndiotactic structure.

(1) $^{13}$C-NMR data

(i) Signal of $C_1$ carbon of the aromatic ring

It is well known that splitting of the aromatic ring $C_1$ carbon signal is ascribable to a polymer microstructure. The value found in the literature, and the values actually measured for the polystyrene of Example 1, atactic polystyrene of Comparative Example 1 and isotactic polystyrene of Comparative Example 2 (Fig. 1 (a), (b), (c)) are tabulated in Table 1.

It can be seen from the results of Table 1 that the polystyrene of Example 1 has a syndiotactic structure, and the syndiotacticity in terms of the racemic pentad as determined from the peak area of Fig. 1 (a) is not less than 96%; that is, the polystyrene of Example 1 had a tacticity of nearly 100%.

Table 1

| Ascription *1 | Type of Polystyrene | | | |
|---|---|---|---|---|
| | Atactic Polystyrene | Value of the Literature *2 | Polystyrene of Example 1 | Isotactic Polystyrene |
| mmmm | - | - | - | 146.44 |
| mmmr | 146.27 | 146.23 | - | - |
| rmmr | 146.00 | 146.03 | - | - |
| mmrm | 145.85 | 145.80 | - | - |
| mmrr | - | - | - | - |
| rmrm | 145.60 | 145.63 | - | - |
| rrmr | - | - | - | - |
| rr | 145.32 | 145.32 | 145.35 | - |

*1: m represents a structural unit of

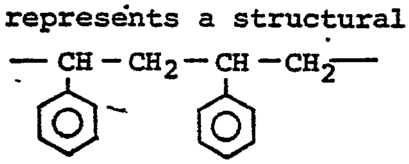

and r represents a structural unit of

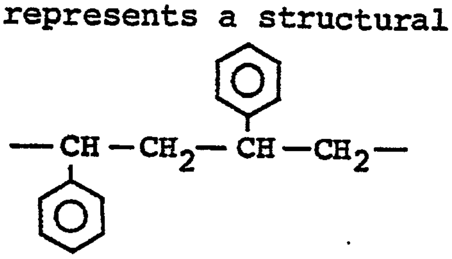

*2: Value shown in H. Sato & Y. Tanaka, J. Polym. Sci., Polym. Phys. Ed., 21, 1667-1674 (1983).

(ii) Methine methylene carbon signal

It is also well known that splitting of the methine methylene carbon signal is ascribable to a polymer microstructure. In the case of polystyrene, there are many literatures reporting the ascription of the splitting. The value found in the literature, and the values actually measured for the polystyrene of Example 1, atactic polystyrene of Comparative Example 1 and isotactic polystyrene of Comparative Example 2 (Fig. 2 (a), (b), (c)) are tabulated in Table 2.

Table 2

| Ascription*1 | Type of Polystyrene | | | |
|---|---|---|---|---|
| | Atactic Polystyrene | Value of the Literature*2 | Polystyrene of Example 1 | Isotactic Polystyrene |
| mrmm | 46.73 | 46.73 | – | – |
| mrmrr | 46.65 | 46.44 | – | – |
| rrmrr | 46.19 | 46.22 | – | – |
| mrrrm | 45.79 | 45.61 | – | – |
| rrrrm | 45.20 | 45.22 | – | – |
| rrrrr | 44.70 | 44.95 | 44.74 | – |
| mmr | – | 44.79 | – | – |
| mrrmr | 44.05 | 44.05 | – | – |
| mrrmm | – | – | – | – |
| rrrmr | 43.53 | 43.59 | – | – |
| rrrmm | – | – | – | – |
| mmm | – | – | – | 43.34 |
| rmrmr | – | 42.70 | – | – |
| mmrmr | – | 42.66 | – | – |
| mmrmm | – | 42.55 | – | – |

*1, *2: Same as in Table 1.

The figures in the table are expressed in the unit of ppm (tetramethylsilane (TMS) standards). It can be seen from the results of Table 2 that the polystyrene of Example 1 is syndiotactic polystyrene, and its syndiotacticity is nearly 100% because the signal of methylene carbon exhibits a single peak.

(2) $^1$H-NMR data

It is well known as described in S. Brownstein, S. Bywater & D.T. Worsfold, J. Phys. Chem., 66, 2067 (1962) that the $^1$H-NMR spectrum provides an information concerning the microstructure like the $^{13}$C-NMR spectrum.

The methine proton signal of the polystyrene of Example 1 shows that when Fig. 3 (a) and (b) are compared, the methine proton of the polystyrene of Example 1 appears a higher magnetic field as compared with that of the isotactic polystyrene of Comparative Example 2; that is, the polystyrene of Example 1 is apparently different from the isotactic polystyrene of Comparative Example 2. Furthermore, the spectrum of the polystyrene of Example 1 shows considerable fine structure. This fact also confirms that the polystyrene of Example 1 is different from at actic polystyrene because the spectrum of the atactic polystyrene does not show a fine structure (see F.A. Bovey & F.P. Hood III, J. Chem. Phys., 38, 1026 (1963). Moreover, there were observed only one kind of methine proton and of methylene proton in the molecular chain. Based the above data, it was judged that the polystyrene of Example 1 had a nearly 100% syndiotactic structure.

Based on the results of (1) and (2) above, it was confirmed that the polystyrene of Example 1 was a polymer having a steric configuration comprising not less than 96% in terms of the racemic pentad; that is, a polymer comprising nearly 100% of a syndiotactic structure.

(3) X-ray diffraction pattern

The polystyrene of Example 1 was crystalline. The X-ray diffraction pattern (Fig. 4 (a)) of the crystalline polystyrene is quite different from that of the isotactic polystyrene (Fig. 4 (b)) (G. Natta & P. Corradini, NuovoCimento, 15, Suppl. 1, 40 (1960)). Thus it can be seen that the polystyrene of Example 1 is different in crystalline structure from isotactic polystyrene.

From the results of Fig. 4 (a), it was found that the identity period of the polystyrene of Example 1 was 5.04 Å. This identity period suggests that the polymer chain is in a zig-zag structure and phenyl rings are disposed alternately. This confirms that the polystyrene of Example 1 has a syndiotactic structure.

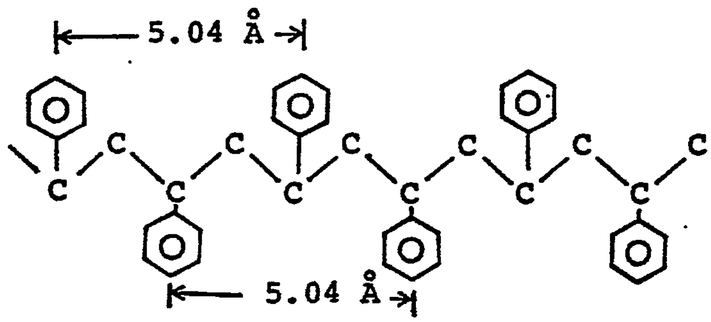

(4) Infrared absorption spectrum

Peaks of the spectra shown in Fig. 5 (a), (b), (c) are shown in Table 3.

**Table 3**

| | Wave Number ($cm^{-1}$) | | | | |
|---|---|---|---|---|---|
| | 1364 | 1312 | 1297 | 1185 | 583 |
| Polystyrene of Example 1 | x | x | x | o | x |
| Isotactic Polystyrene | o | o | o | o | o |
| Atactic Polystyrene | o | o | o | o | x |

o: Absorption

x: No absorption

The polystyrene of Examples 1 had a characteristic absorption peak at 1220 $cm^{-1}$ which cannot be found in polystyrene having an isotactic or atactic structure.

(5) Melting point

The melting point of the polystyrene of Example 1 was 260-270°C, which is much higher than that (220-230°C) of isotactic polystyrene.

(6) Tacticity of extract after extraction with methyl ethyl ketone

In determining the stereoregularity of polystyrene, the following method is generally employed.

Polystyrene is extracted with methyl ethyl ketone as a solvent by the use of a Soxhlet extractor. If the polystyrene is insoluble, it is determined to be isotactic polystyrene, and if soluble, it is determined to be atactic polystyrene (T. Nakada, Y. Kinosita, T. Ohtu & M. Imoto, Kougyo Kagaku, 68, 858-864 (1965)).

A methyl ethyl ketone-insoluble portion of the polystyrene of Example 1 had a syndiotactic structure, and a methyl ethyl ketone-soluble portion also had a syndiotacticity of not less than 82%.

EXAMPLE 2

Styrene (100 ml) was polymerized at 50°C for 8 hours in the presence of a catalyst comprising 1 mmol of titanium tetrachloride and 40 mmol of methylaluminoxane. Thereafter, the same procedure as in Example 1 (2) was repeated to form 0.1 g of polystyrene.

For the polystyrene thus obtained, the syndiotacticity was such that the racemic pentad of $^{13}C$-NMR was not less than 36%, the weight average molecular weight (Mw) was 544,000, and the number average molecular weight (Mn) was 223,000.

In the extraction of the polystyrene with methyl ethyl ketone, 79 wt% of the polystyrene was extracted. For the extraction residue, the syndiotacticity was such that the racemic pentad of $^{13}C$-NMR was 86%, the weight average molecular weight (Mw) was 678,000 and the number average molecular weight (Mn)

was 272,000. The syndiotacticity of the above extract was such that the racemic pentad of $^{13}C$-NMR was 23%. This is similar to a tacticity of the usual radical polymerized polystyrene.

EXAMPLE 3

The procedure of Example 2 was repeated wherein the amount of titanium tetrachloride as a catalyst component was changed to 0.05 mmol, the amount of styrene used was changed to 180 ml, and the polymerization time was changed to 2 hours. In this way, 6.7 g of polystyrene was produced.

In the extraction of the polystyrene thus obtained with methyl ethyl ketone, 8 wt% of the polystyrene was extracted. For the extraction residue; that is, polystyrene remaining after the extraction, the syndiotacticity was not less than 99%, the weight average molecular weight (Mw) was 348,000 and the number average molecular weight (Mn) was 156,000.

EXAMPLE 4

The procedure of Example 1 was repeated wherein 1 mmol of isopropoxytitanium trichloride was used in place of titanium tetrachloride as a catalyst component and the polymerization time was changed to 2 hours. In this way, 0.4 g of polystyrene was produced. For the polystyrene thus produced, the syndiotacticity was such that the racemic pentad of $^{13}C$-NMR was 96%, the weight average molecular weight (Mw) was 92,000 and the number average molecular weight (Mn) was 31,000.

In the extraction of the above polystyrene with methyl ethyl ketone, 58 wt% of the polystyrene was extracted. For the extraction residue; that is, polystyrene remaining after the extraction, the syndiotacticity was such that the racemic pentad of $^{13}C$-NMR was 96%, the weight average molecular weight (Mw) was 100,000 and the number average molecular weight (Mn) was 36,000. The syndiotacticity of the extract was such that the racemic pentad was 23%.

EXAMPLE 5

Polystyrene was produced in the same manner as in Example 2 except that a catalyst comprising 0.02 mmol of ethoxytitanium trichloride and 10 mmol of methylaluminoxane was used and polymerization was performed under the conditions shown in Table 4. The polystyrene thus produced was extracted with methyl ethyl ketone in the same manner as in Example 2. Properties of the polystyrene are shown in Table 4.

EXAMPLE 6

Polystyrene was produced in the same manner as in Example 2 except that a catalyst comprising 0.2 mmol (calculated as titanium tetrachloride) of magnesium diethoxide with titanium tetrachloride deposited thereon in an amount of 146 mg/g carrier and 10 mmol of methylaluminoxane was used and polymerization was performed under the conditions shown in Table 4. The polystyrene thus produced was extracted with methyl ethyl ketone. Properties of the polystyrene are shown in Table 4.

EXAMPLE 7

Polystyrene was produced in the same manner as in Example 2 except that a catalyst comprising 0.2 mmol (calculated as tetraethoxytitanium) of magnesium chloride with titanium tetraethoxide deposited thereon in an amount of 80 mg/g carrier and 10 mmol of methylaluminoxane was used and polymerization was performed under the conditions shown in Table 4. The polystyrene thus produced was extracted with methyl ethyl ketone in the same manner as in Example 2. Properties of the polystyrene are shown in Table 4.

EXAMPLE 8

Polystyrene was produced in the same manner as in Example 2 except that a catalyst comprising 0.02 mmol (calculated as titanium) of magnesium chloride with an excess of titanium tetrachloride deposited thereon and 10 mmol of methylaluminoxane was used and polymerization was performed under the conditions shown in Table 4. The polystyrene thus produced was extracted with methyl ethyl ketone in the same manner as in Example 2. Properties of the polystyrene are shown in Table 4.

EXAMPLE 9

Polystyrene was produced in the same manner as in Example 2 except that a catalyst comprising 0.02 mmol (calculated as titanium) of magnesium chloride with titanium tetrachloride and ethyl benzoate deposited thereon and 10 mmol of methylaluminoxane was used and polymerization was performed under the conditions shown in Table 4. The polystyrene thus produced was extracted with methyl ethyl ketone in the same manner as in Example 2. Properties of the polystyrene are shown in Table 4.

EXAMPLE 10

Polystyrene was produced in the same manner as in Example 2 except that a catalyst comprising 0.02 mmol of titanium trichloride and 20 mmol of methylaluminoxane was used and polymerization was performed under the conditions shown in Table 4. The polystyrene thus produced was extracted with methyl ethyl ketone in the same manner as in Example 2. Properties of the polystyrene are shown in Table 4.

EXAMPLE 11

Polystyrene was produced in the same manner as in Example 2 except that a catalyst comprising 1 mmol of titanium tetrachloride, 1 mmol of vanadyl tributoxide ($VO(O{\bullet}C_4H_9)_3$) and 40 mmol of methylaluminoxane was used and polymerization was performed under the conditions shown in Table 4. The polystyrene thus produced was extracted with methyl ethyl ketone in the same manner as in Example 2. Properties of the polystyrene are shown in Table 4.

EXAMPLES 12 AND 13

Polystyrene was produced in the same manner as in Example 2 except that a catalyst comprising 1 mmol of isopropoxytitanium chloride, 1 mmol of vanadyl tributoxide and 40 mmol of methylaluminoxane was used and polymerization was performed under the conditions shown in Table 4. The polystyrene thus produced was extracted with methyl ethyl ketone in the same manner as in Example 2. Properties of the polystyrene are shown in Table 4.

EXAMPLES 14 TO 16

Polystyrene was produced in the same manner as in Example 2 except that a catalyst comprising 0.05 mmol of titanium tetraethoxide and 5 mmol of methylaluminoxane was used and polymerization was performed under the conditions shown in Table 4. The polystyrene thus produced was extracted with methyl ethyl ketone in the same manner as in Example 2. Properties of the polystyrene are shown in Table 4.

EXAMPLE 17

Polystyrene was produced in the same manner as in Example 2 except that a catalyst comprising 0.05 mmol of titanium tetraethoxide and 10 mmol of methylaluminoxane was used and polymerization was performed under the conditions shown in Table 4. The polystyrene thus produced was extracted with methyl ethyl ketone in the same manner as in Example 2. Properties of the polystyrene are shown in Table 4.

EXAMPLES 18 TO 20

Polystyrene was produced in the same manner as in Example 2 except that a catalyst comprising 0.05 mmol of titanium tetraethoxide and 25 mmol of methylaluminoxane was used and polymerization was performed under the conditions shown in Table 4. The polystyrene thus produced was extracted with methyl ethyl ketone in the same manner as in Example 2. Properties of the polystyrene are shown in Table 4.

EXAMPLE 21

Polystyrene was produced in the same manner as in Example 2 except that a catalyst comprising 1 mmol of titanium tetraisoproxide, 1 mmol of vanadyl tributoxide and 40 mmol of methylaluminoxane was used and polymerization was performed under the conditions shown in Table 4. The polystyrene thus produced was extracted with methyl ethyl ketone in the same manner as in Example 2. Properties of the polystyrene are shown in Table 4.

EXAMPLE 22

A styrene-p-methylstyrene copolymer was produced in the same manner as in Example 2 except that a catalyst comprising 0.02 mmol of cyclopentadienyltitanium trichloride and 10 mmol of methylaluminoxane was used, and a mixture of styrene and p-methylstyrene was used as the starting material and polymerized under the conditions shown in Table 4. The copolymer thus produced was extracted with methyl ethyl ketone in the same manner as in Example 2. Properties of the copolymer are shown in Table 4.

EXAMPLE 23

Poly(p-methylstyrene) was produced in the same manner as in Example 2 except that a catalyst comprising 0.025 mmol of cyclopentadienyltitanium trichloride and 40 mmol of methylaluminoxane was used, and p-methylstyrene was used as the starting material and polymerized under the conditions shown in Table 4. The poly(p-methylstyrene) thus produced was extracted with methyl ethyl ketone in the same manner as in Example 2. Properties of the poly(p-methylstyrene) are shown in Table 4.

A $^{13}C$-NMR spectrum (aromatic carbon $C_1$ carbon signal) of the poly(p-methylstyrene) is shown in Fig. 1 (d); a $^{13}C$-NMR spectrum (methine methylene carbon signal) is shown in Fig. 2 (d); a $^1H$-NMR spectrum is shown in Fig. 3 (c); an X-ray diffraction pattern is shown in Fig. 4 (c); and an infrared absorption spectrum is shown in Fig. 5 (d).

EXAMPLE 24

Poly(m-methylstyrene) was produced in the same manner as in Example 2 except that a catalyst comprising 0.05 mmol of cyclopentadienyltitanium trichloride and 30 mmol of methylaluminoxane was used, and m-methylstyrene was used as the starting material and polymerized under the conditions shown in Table 4. The poly(m-methylstyrene) thus produced was extracted with methyl ethyl ketone in the same manner as in Example 2. Properties of the poly(m-methylstyrene) are shown in Table 4.

A$^{13}C$-NMR (aromatic ring $C_1$ carbon signal) of the poly(m-methylstyrene) is shown in Fig. 1 (e).

EXAMPLE 25

Poly(p-tert-butylstyrene) was produced in the same manner as in Example 2 except that a catalyst comprising 0.05 mmol of cyclopentadienyltitanium trichloride and 30 mmol of methylaluminoxane was used, and p-tert-butylstyrene was used as the starting material and polymerized under the conditions shown in Table 4. The poly(p-tert-butylstyrene) thus produced was extracted with methyl ethyl ketone in the same manner as in Example 2. Properties of the poly(p-tert-butylstyrene) are shown in Table 4.

A $^{13}C$-NMR spectrum (aromatic ring $C_1$ carbon signal) of the poly(p-tert-butylstyrene) is shown in Fig. 1 (f).

EXAMPLE 26

Poly(p-chlorostyrene) was produced in the same manner as in Example 2 except that a catalyst comprising 0.05 mmol of cyclopentadienyltitanium trichloride and 40 mmol of methylaluminoxane was used, p-chlorostyrene was used as the starting material and polymerized under the conditions shown in Table 4. The poly(p-chlorostyrene) thus produced was extracted with methyl ethyl ketone in the same manner as in Example 2. Properties of the poly(p-chlorostyrene) are shown in Table 4.

A $^{13}C$-NMR spectrum (aromatic ring $C_1$ carbon signal) of the poly(p-chlorostyrene) is shown in Fig. 1 (g). For comparison, a $^{13}C$-NMR spectrum (aromatic ring $C_1$ carbon signal) of atactic poly(p-chlorostyrene) is shown in Fig. 1 (h).

EXAMPLE 27

Poly(m-chlorostyrene) was produced in the same manner as in Example 2 except that a catalyst comprising 0.05 mmol of titanium tetraethoxide and 5 mmol of methylaluminoxane was used, and m-chlorostyrene was used as the starting material and polymerized under the conditions shown in Table 4. The poly(m-chlorostyrene) thus produced was extracted with methyl ethyl ketone in the same manner as in Example 2. Properties of the poly(m-chlorostyrene) are shown in Table 4. A $^{13}C$-NMR spectrum (aromatic ring $C_1$ carbon signal) of the poly(m-chlorostyrene) is shown in Fig. 1 (i).

EXAMPLE 28

Poly(p-fluorostyrene) was produced in the same manner as in Example 2 except that a catalyst comprising 0.05 mmol of cyclopentadienyltitanium trichloride and 30 mmol of methylaluminoxane was used, and p-fluorostyrene was used as the starting material and polymerized under the conditions shown in Table 4. The poly(p-fluorostyrene) thus produced was extracted with methyl ethyl ketone in the same manner as in Example 2. Properties of the poly(p-fluorostyrene) are shown in Table 4. A $^{13}C$-NMR spectrum (aromatic ring $C_1$ carbon signal) of the poly(p-fluorostyrene) is shown in Fig. 1 (j).

Table 4

| Example | Monomer |  | Solvent |  | Polymerization Conditions |  | Properties of Polymer |  |  |  |  |  |
|---|---|---|---|---|---|---|---|---|---|---|---|---|
|  | Type | Amount (ml) | Type | Amount (ml) | Temp. (°C) | Time (hours) | Polymer Yield (g) | Polymer Extraction Residue (wt%) | Molecular Weight Mw | Molecular Weight Mn | Syndiotacticity *1 | Remarks |
| 1 | Styrene | 180 | Toluene | 100 | 20 | 1 | 16.5 | 97 | 280,000 | 57,000 | 96< | Product (m.p. 260°C) |
| 2 | " | 100 | " | 100 | 50 | 8 | 0.2 | 21 | 678,000 | 272,000 | 86 | Extraction residue |
| 3 | " | 180 | " | 100 | 50 | 2 | 6.7 | 92 | 348,000 | 156,000 | 99 | " |
| 4 | " | 100 | " | 100 | 50 | 2 | 0.4 | 42 | 100,000 | 36,000 | 96 | " |
| 5 | " | 50 | " | 100 | 50 | 2 | 0.67 | 75 | 388,000 | 124,000 | 91 | " |
| 6 | " | 50 | " | 100 | 50 | 2 | 0.42 | 32 | 239,000 | 115,000 | 96 | " |
| 7 | " | 50 | " | 100 | 50 | 2 | 1.2 | 88 | 256,000 | 121,000 | 97 | " |
| 8 | " | 50 | " | 100 | 50 | 2 | 1.08 | 70 | 517,000 | 220,000 | 74 | " |
| 9 | " | 50 | " | 100 | 50 | 2 | 1.63 | 84 | 600,000 | 230,000 | 38 | " |
| 10 | " | 50 | " | 100 | 50 | 2 | 0.41 | 30 | 871,000 | 413,000 | 58 | " |
| 11 | " | 50 | " | 200 | 50 | 2 | 0.35 | 30 | 174,000 | 68,000 | 75 | " |
| 12 | " | 50 | " | 200 | 50 | 2 | 0.5 | 41 | 204,000 | 22,000 | 85 | " |
| 13 | " | 100 | " | 100 | 50 | 2 | 0.5 | 41 | 163,000 | 19,000 | 31 | " |
| 14 | " | 150 | " | 20 | 20 | 6 | 3.0 | 84 | 2,480,000 | 995,000 | 96< | " |
| 15 | " | 150 | " | 20 | 30 | 7 | 8.9 | 99 | 1,893,000 | 773,000 | 96< | " |
| 16 | " | 150 | " | 20 | 40 | 3 | 12.5 | 96 | 1,244,000 | 358,000 | 96< | " |
| 17 | " | 150 | " | 20 | 50 | 4 | 15.7 | 94 | 613,000 | 288,000 | 96< | " |
| 18 | " | 50 | Benzene | 100 | 50 | 4 | 1.9 | 89 | 301,000 | 96,000 | 96< | " |

Table 4 (Continued)

| Example | Monomer Type | Monomer Amount (ml) | Solvent Type | Solvent Amount (ml) | Polymerization Conditions Temp. (°C) | Polymerization Conditions Time (hours) | Properties of Polymer: Polymer Yield (g) | Polymer Extraction Residue (wt%) | Molecular weight Mw | Molecular weight Mn | Syndiotacticity *1 | Remarks |
|---|---|---|---|---|---|---|---|---|---|---|---|---|
| 19 | Styrene | 50 | p-Xylene | 100 | 50 | 2 | 1.8 | 92 | 201,000 | 101,000 | 96< | Extraction residue |
| 20 | " | 75 | Toluene | 75 | 50 | 6 | 3.3 | 86 | 407,000 | 193,000 | 96< | " |
| 21 | " | 100 | " | 200 | 50 | 3.5 | 0.4 | 11 | 9,700 | 3,900 | 88 | " |
| 22 | "<br>p-Methyl-styrene | 53.1<br>5.2 | " | 100 | 50 | 2 | 17.8 | 76 | 79,000 | 45,000 | 72*2 | " |
| 23 | p-Methyl-styrene | 80 | " | 100 | 50 | 1 | 16.0 | 55 | 48,000<br>33,000 | 23,000<br>14,000 | 94<br>- | Extraction residue (m.p. 173°C)<br>Extraction residue (m.p. 168°C) |
| 24 | m-Methyl-styrene | 17 | " | 100 | 50 | 3 | 15.1 | 98 | 59,000 | 26,000 | 92 | Extraction residue (m.p. 206°C) |
| 25 | p-tert-Butyl-styrene | 27g | " | 100 | 50 | 4 | 25.3 | 99 | 71,000 | 21,000 | 94 | Extraction residue (m.p. 310°C) |
| 26 | p-Chloro-styrene | 40 | " | 100 | 20 | 2 | 1.7 | 90 | 20,000 | 2,000 | 91 | Extraction residue (m.p. 298°C) |
| 27 | m-Chloro-styrene | 25 | " | 100 | 50 | 9 | 1.8 | 51 | 47,000 | 13,000 | 80 | Extraction residue |
| 28 | p-Fluoro-styrene | 24 | " | 100 | 50 | 5 | 0.2 | - | 29,000 | 88,000 | 70 | " |

*1 Expressed in the racemic pentad.

*2 Expressed in the racemic pentad in the styrene structure unit.

## Claims

1. A styrene polymer having a high syndiotactic structure and having a repeating unit represented by the general formula (I):

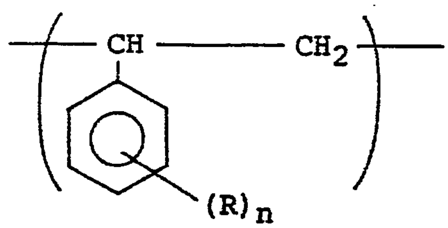

...... (I)

(wherein R represents a hydrogen atom, a halogen atom or a substituent containing a carbon atom, an oxygen atom, a nitrogen atom, a sulfur atom, a phosphorus atom or a silicon atom, and n represents an integer of 1 to 3), and a degree of polymerization of not less than 5.

2. The styrene polymer of claim 1, wherein the syndiotacticity in terms of the racemic pentad is not less than 50%.

3. The styrene polymer of any of the claims 1 or 2, wherein the degree of polymerization is not less than 10.

4. The styrene polymer of any of the claims 1 to 3, wherein $(R)_n$ is in the m-position and n is 1.

5. The styrene polymer of any of the claims 1 to 3, wherein $(R)_n$ is in the p-position and n is 1.

6. The styrene polymer of any of the claims 1 to 5, which is a polymer selected from the group consisting of polystyrene, poly(alkylstyrene), poly(halogenated styrene), poly(halogen-substituted alkylstyrene), poly(alkyloxystyrene), poly(carboxyesterstyrene), poly(alkyletherstyrene), poly(alkylsilylstyrene), poly(ethylvinylbenzenesulfonate), and poly(vinylbenzyldimethoxyphosphide).

7. The styrene polymer of claim 1 or 3, wherein the polymer is polystyrene having a syndiotacticity expressed in terms of the racemic pentad of not less than 30%.

8. The styrene polymer of claim 1 to 3, wherein the polymer is poly(p-methylstyrene) having a syndiotacticity expressed in terms of the racemic pentad of not less than 30%.

9. The styrene polymer of claim 1 or 3, wherein the polymer is poly(m-methylstyrene) having a syndiotacticity expressed in terms of the racemic pentad of not less than 35%.

10. The styrene polymer of claim 1 or 3, wherein the polymer is poly(o-methylstyrene) having a syndiotacticity expressed in terms of the racemic pentad of not less than 30%.

11. The styrene polymer of claim 1 or 3, wherein the polymer is poly(o-methoxystyrene) having a syndiotacticity expressed in terms of the racemic pentad of not less than 40%.

12. The styrene polymer of claim 1 or 3, wherein the polymer is poly(p-methoxystyrene) having a syndiotacticity expressed in terms of the racemic pentad of not less than 30%.

13. Process for preparing styrene polymers of any of the claims 1 to 12, which comprises polymerizing styrene or styrene derivatives by the use of a catalyst comprising:

A) cyclopendadienyltitaniumtrichloride, and

B) methylaluminoxane derived from the reaction of trimethyl aluminum and water.

## Patentansprüche

1. Styrolpolymer mit einer hoch-syndiotaktischen Struktur und mit einer sich wiederholenden Einheit, dargestellt durch die allgemeine Formel (I):

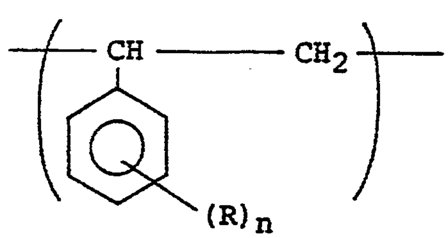

...... (I)

(worin R eine Wasserstoffatom, ein Halogenatom oder einen Substituenten enthaltend ein Kohlenstoffatom, ein Sauerstoffatom, ein Stickstoffatom, ein Schwefelatom, ein Phosphoratom oder ein Siliziumatom, darstellt und n eine Zahl von 1 bis 3 darstellt), und einem Polymerisationsgrad von nicht weniger als

5.

2. Styrolpolymer nach Anspruch 1, worin die Syndiotaktizität in Ausdrücken der racemischen Pentade nicht weniger als 50% ist.

3. Styrolpolymer nach einem der Ansprüche 1 oder 2, worin der Polymerisationsgrad nicht weniger als 10 ist.

4. Styrolpolymer nach einem der Ansprüche 1 bis 3, worin $(R)_n$ in der m-Position vorliegt und n 1 ist.

5. Styrolpolymer nach einem der Ansprüche 1 bis 3, worin $(R)_n$ in der p-Position vorliegt und n 1 ist.

6. Styrolpolymer nach einem der Ansprüche 1 bis 5, das ein Polymer ist, ausgewählt aus der Gruppe bestehend aus Polystyrol, Poly(alkylstyrol), Poly(halogeniertes Styrol), Poly(Halogen-substituiertes Alkylstyrol), Poly(alkoxystyrol), Poly(carboxyesterstyrol), Poly(alkyletherstyrol), Poly(alkylsilylstyrol), Poly(ethylvinylbenzolsulfonat) und Poly(vinylbenzyldimethoxyphosphid).

7. Styrolpolymer nach Anspruch 1 oder 3, worin das Polymer Polystyrol ist mit einer Syndiotaktizität dargestellt in Ausdrücken der racemischen Pentade von nicht weniger als 30%.

8. Styrolpolymer nach Anspruch 1 oder 3, worin das Polymer Poly(p-methylstyrol) mit einer Syndiotaktizität dargestellt in Ausdrücken der racemischen Pentade von nicht weniger als 30% ist.

9. Styrolpolymer nach Anspruch 1 oder 3, worin das Polymer Poly(m-methylstyrol) mit einer Syndiotaktizität darstellt in Ausdrücken der racemischen Pentade von nicht weniger als 35% ist.

10. Styrolpolymer nach Anspruch 1 oder 3, worin das Polymer Poly(o-methylstyrol) mit einer Syndiotaktizität dargestellt in Ausdrücken der racemischen Pentade von nicht weniger als 30% ist.

11. Styrolpolymer nach Anspruch 1 oder 3, worin das Poly(o-methoxystyrol) mit einer Syndiotaktizität dargestellt in Ausdrücken der racemischen Pentade von nicht weniger als 40% ist.

12. Styrolpolymer nach Anspruch 1 oder 3, worin das Polymer Poly(p-methoxystyrol) mit einer Syndiotaktizität dargestellt in Ausdrücken der racemischen Pentade von nicht weniger als 30% ist.

13. Verfahren zur Herstellung von Styrolpolymeren nach einem der Ansprüche 1 bis 12, welches umfaßt Polymerisieren von Styrol oder Styrolderivaten unter Verwendung eines Katalysators, der umfaßt:

A) Cyclopentadienyltitantrichlorid und

B) Methylaluminoxan erhalten aus der Reaktion von Trimethylaluminium und Wasser.

**Revendications**

1. Polymère de styrène ayant une structure très syndiotactique, et comportant un motif répété représenté par la formule générale (I):

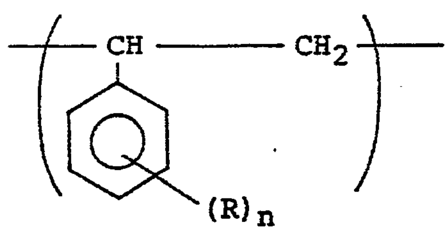

...... (I)

(dans laquelle R représente un atome d'hydrogène, un atome d'halogène ou un substituant contenant un atome de carbone, un atome d'oxygène, un atome d'azote, un atome de soufre, un atome de phosphore ou un atome de silicium, et n représente un entier de 1 à 3), et ayant un degré de polymérisation non inférieur à 5.

2. Polymère de styrène selon la revendication 1, dans lequel la syndiotacticité par rapport aux pendades racémiques, n'est pas inférieure à 50%.

3. Polymère de styrène selon l'une quelconque des revendications 1 et 2, dans lequel le degré de polymérisation n'est pas inférieur à 10.

4. Polymère de styrène selon l'une quelconque des revendications 1 à 3, dans lequel $(R)_n$ est à la position m, et n est égal à 1.

5. Polymère de styrène selon l'une quelconque des revendications 1 à 3, dans lequel $(R)_n$ est à la position p, et n est égal à 1.

6. Polymère de styrène selon l'une quelconque des revendications 1 à 5, consistant en un polymère choisi parmi le polystyrène, un poly(alkylstyrène), un poly(styrène halogéné), un poly(alkyle halogéné), styrène, un poly(alkoxystyrène), un poly(carboxyesterstyrène), poly(alkylétherstyrène), un poly-(alkylsilylstyrène), un poly(benzènesulfonate d'éthylvinyle) et un poly(diméthoxyphosphure de vinylbenzyle).

7. Polymère de styrène selon la revendication 1 ou 3, dans lequel le polymère est un polystyrène ayant une syndiotacticité par rapport aux pentades racémiques, non inférieure à 30%.

8. Polymère de styrène selon la revendication 1 ou 3, dans lequel le polymère est un poly(p-méthylstyrène) ayant une syndiotacticité par rapport aux pentades racémiques, non inférieure à 30%.

9. Polymère de styrène selon la revendication 1 ou 3 dans lequel le polymère est un poly(m-méthylsty-

rène) ayant une syndiotacticité par rapport aux pentades racémiques, non inférieure à 35%.

10. Polymère de styrène selon la revendication 1 ou 3, dans lequel le polymère est un poly(o-méthylstyrène) ayant une syndiotacticité par rapport aux pentades racémiques, non inférieure à 30%.

11. Polymère de styrène selon la revendication 1 ou 3, dans lequel le polymère est un poly(o-méthoxystyrène) ayant une syndiotacticité par rapport aux pentades racémiques, non inférieure à 40%.

12. Polymère de styrène selon la revendication 1 ou 3, dans lequel le polymère est un poly(p-méthoxystyrène) ayant une syndiotacticité par rapport aux pentades racémiques, non inférieure à 30%.

13. Procédé de préparation de polymères de styrène selon l'une quelconque des revendications 1 à 12, dans lequel on polymérise du styrène ou des dérivés de styrène, en employant un catalyseur comprenant:

A) du trichlorure de cyclopentadiényl titane, et

B) du méthylaluminoxane obtenu en faisant réagir du triméthyl aluminium et de l'eau.

FIG. 1(a)

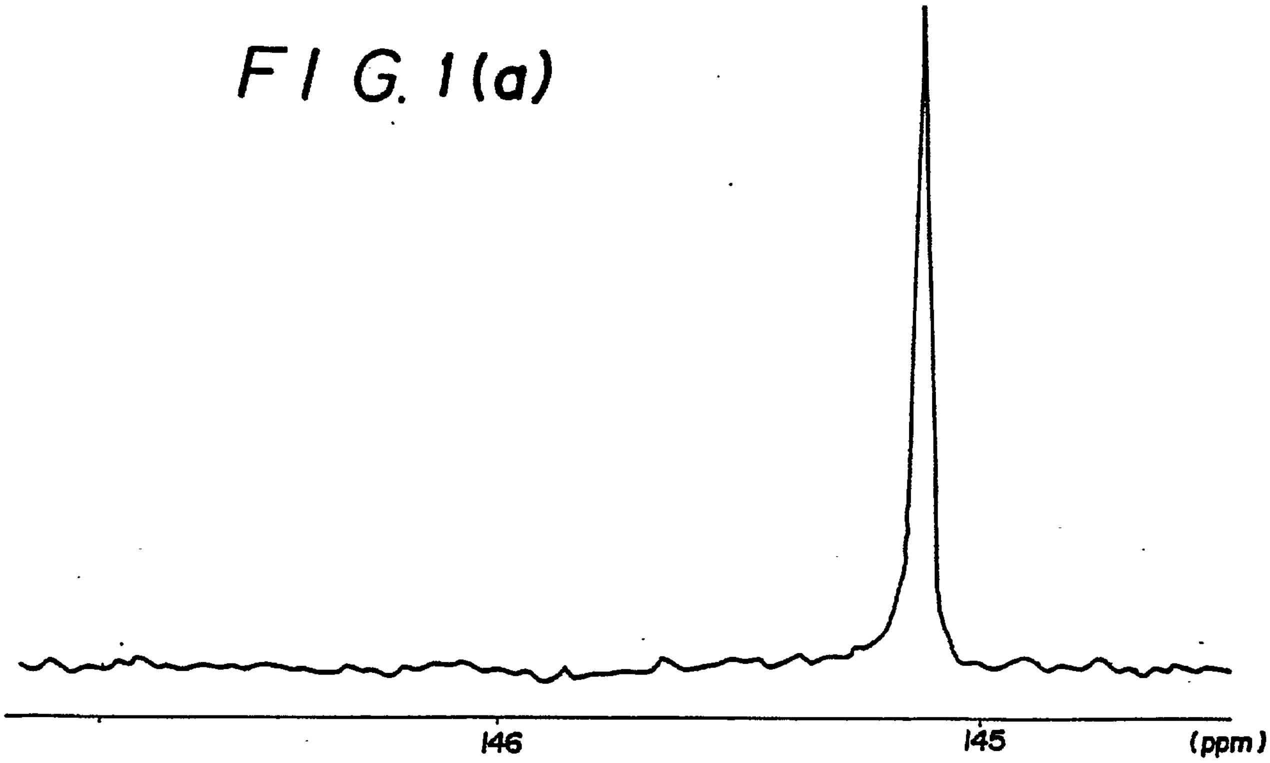


FIG. 1(b)

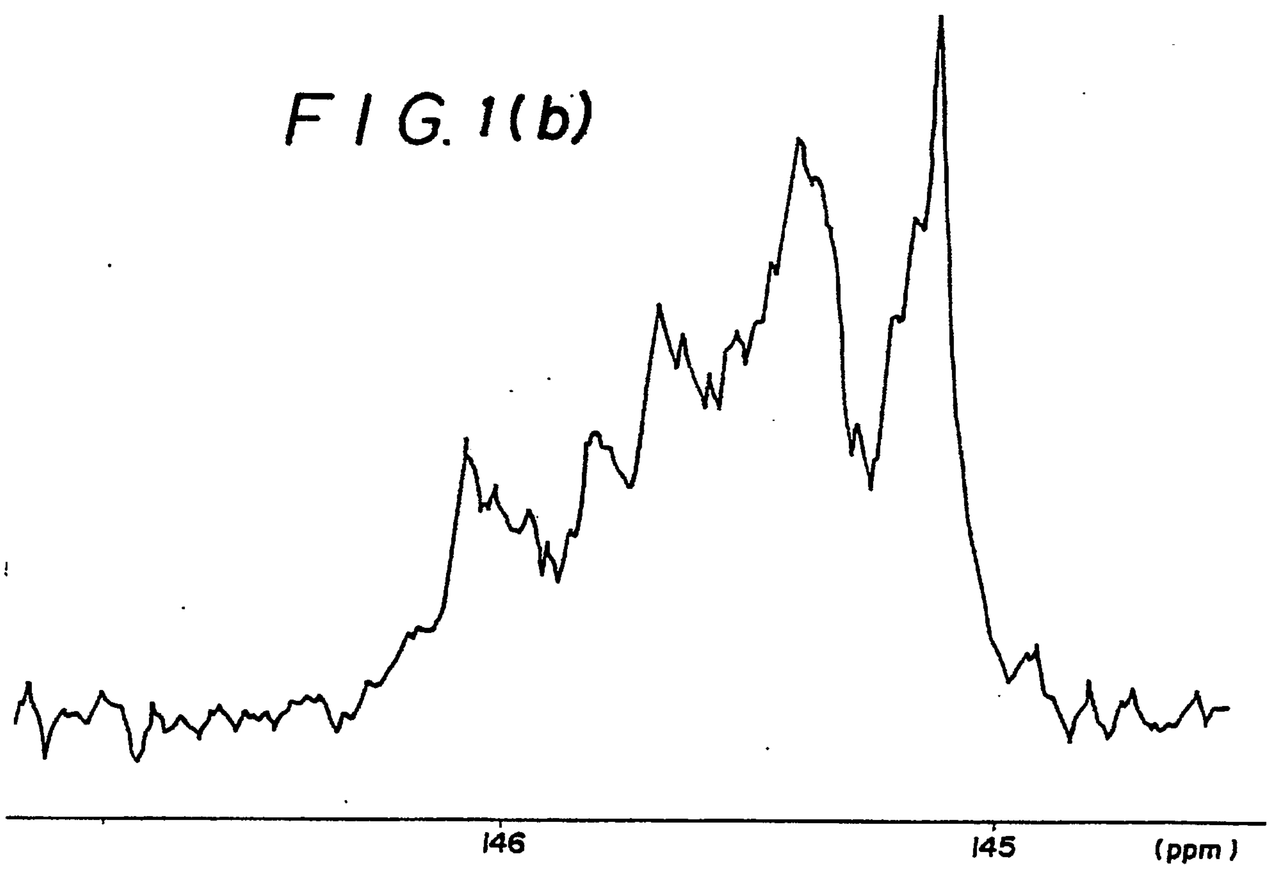

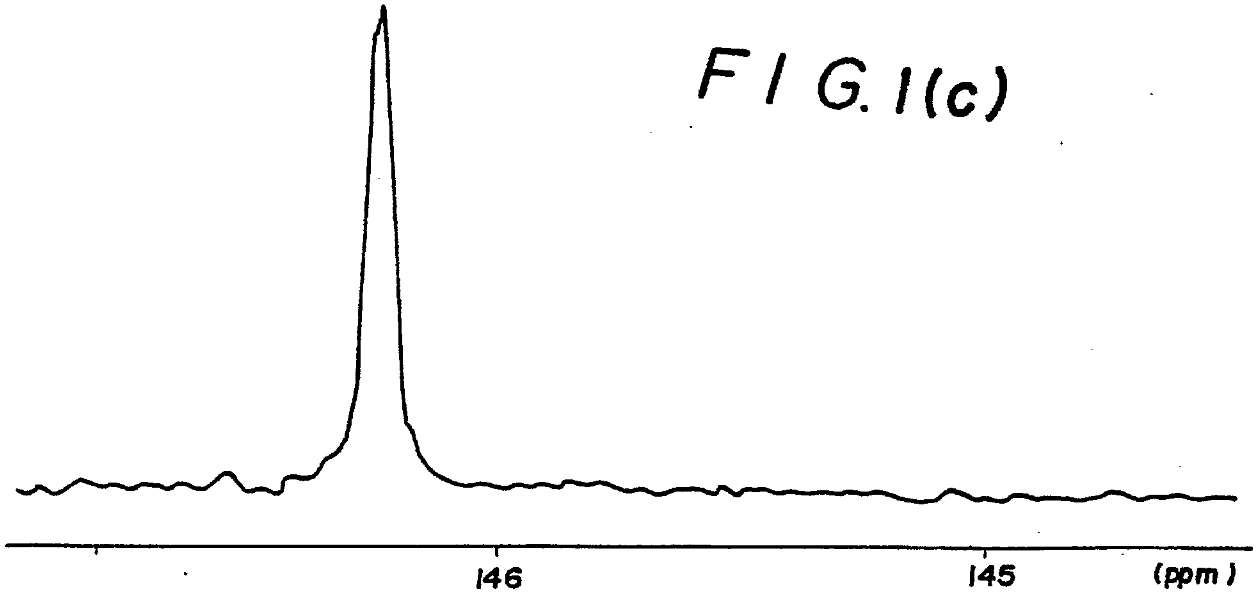


FIG. 1(c)

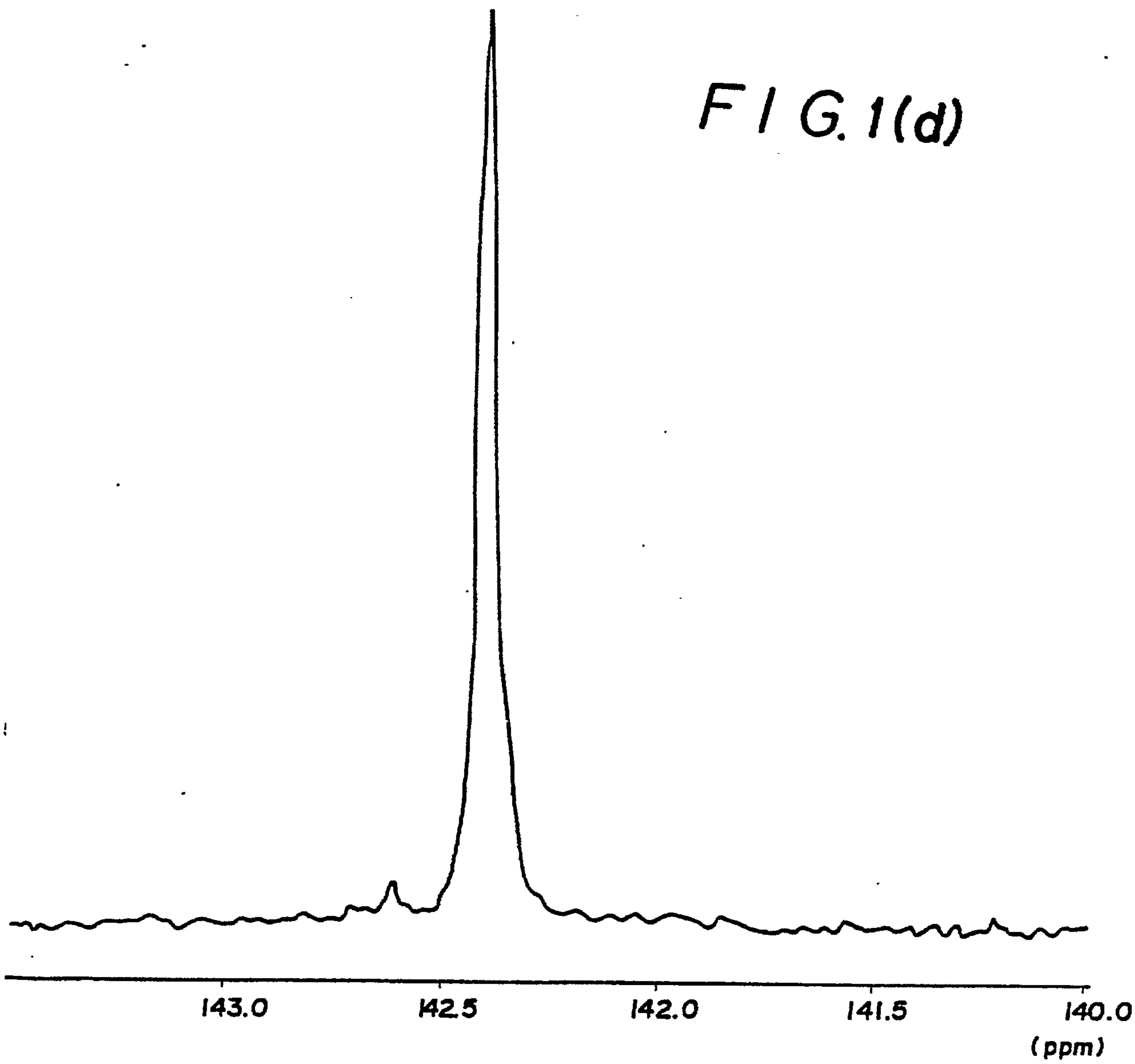


FIG. 1(d)

FIG. 1(e)

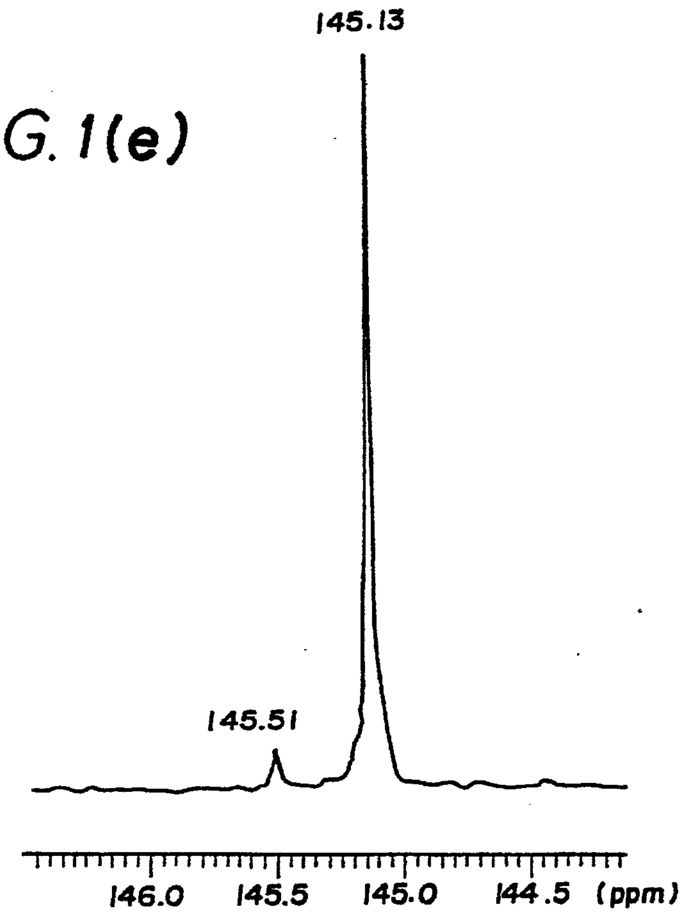


FIG. 1(f)

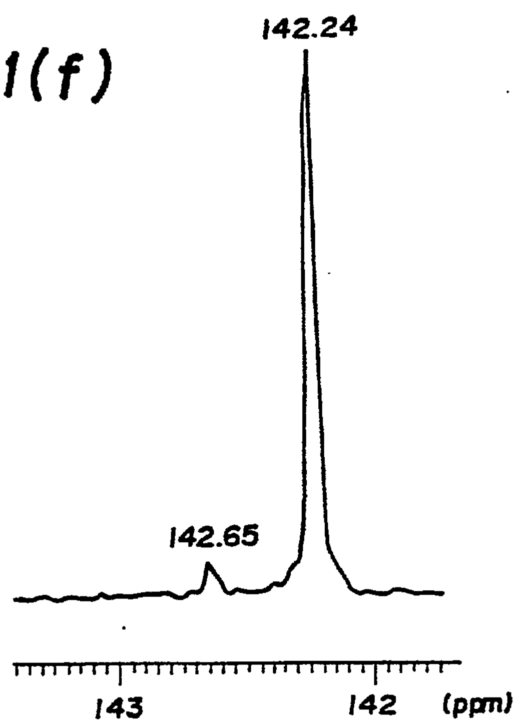

FIG.1(g)

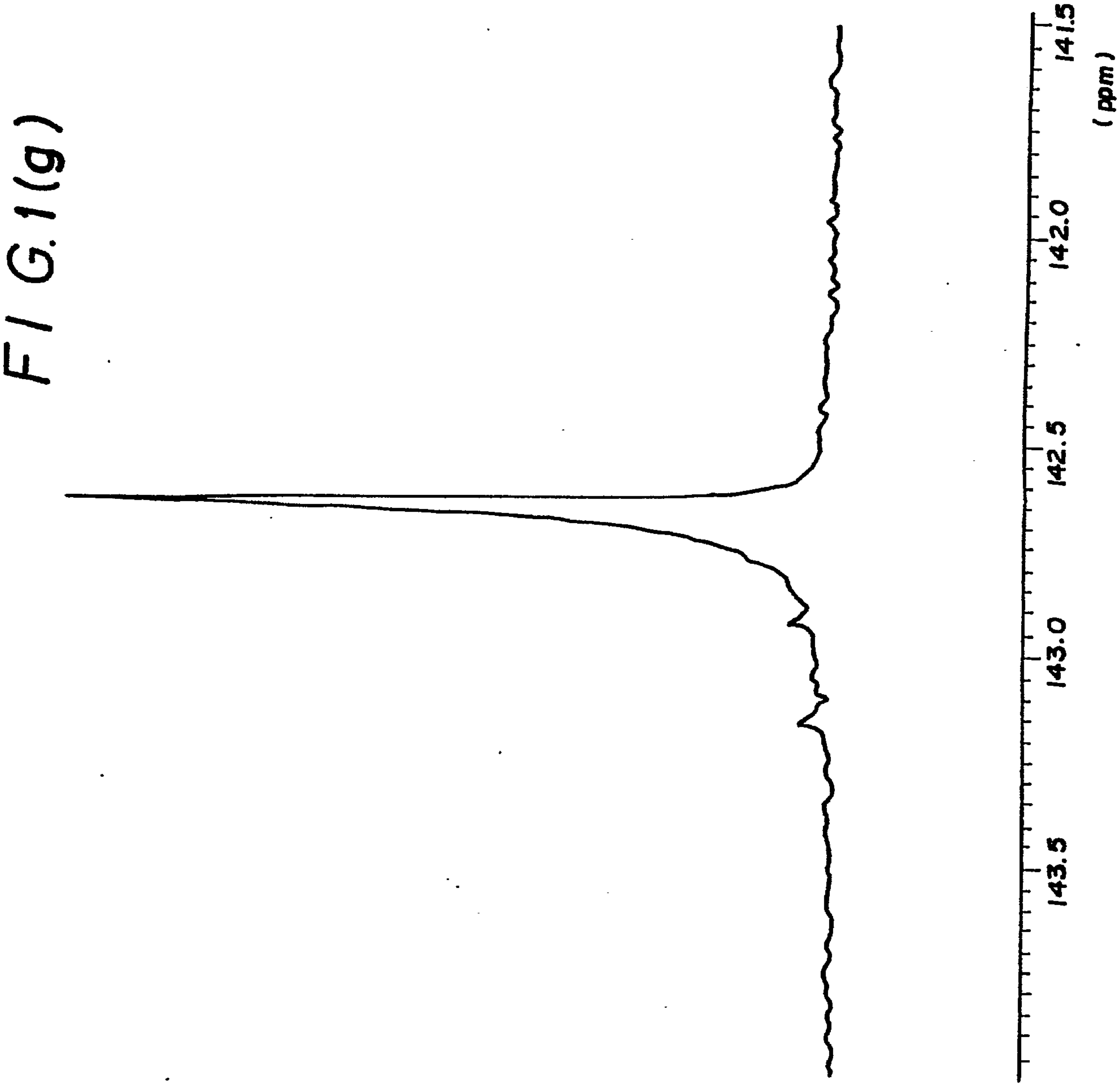

FIG. 1(h)

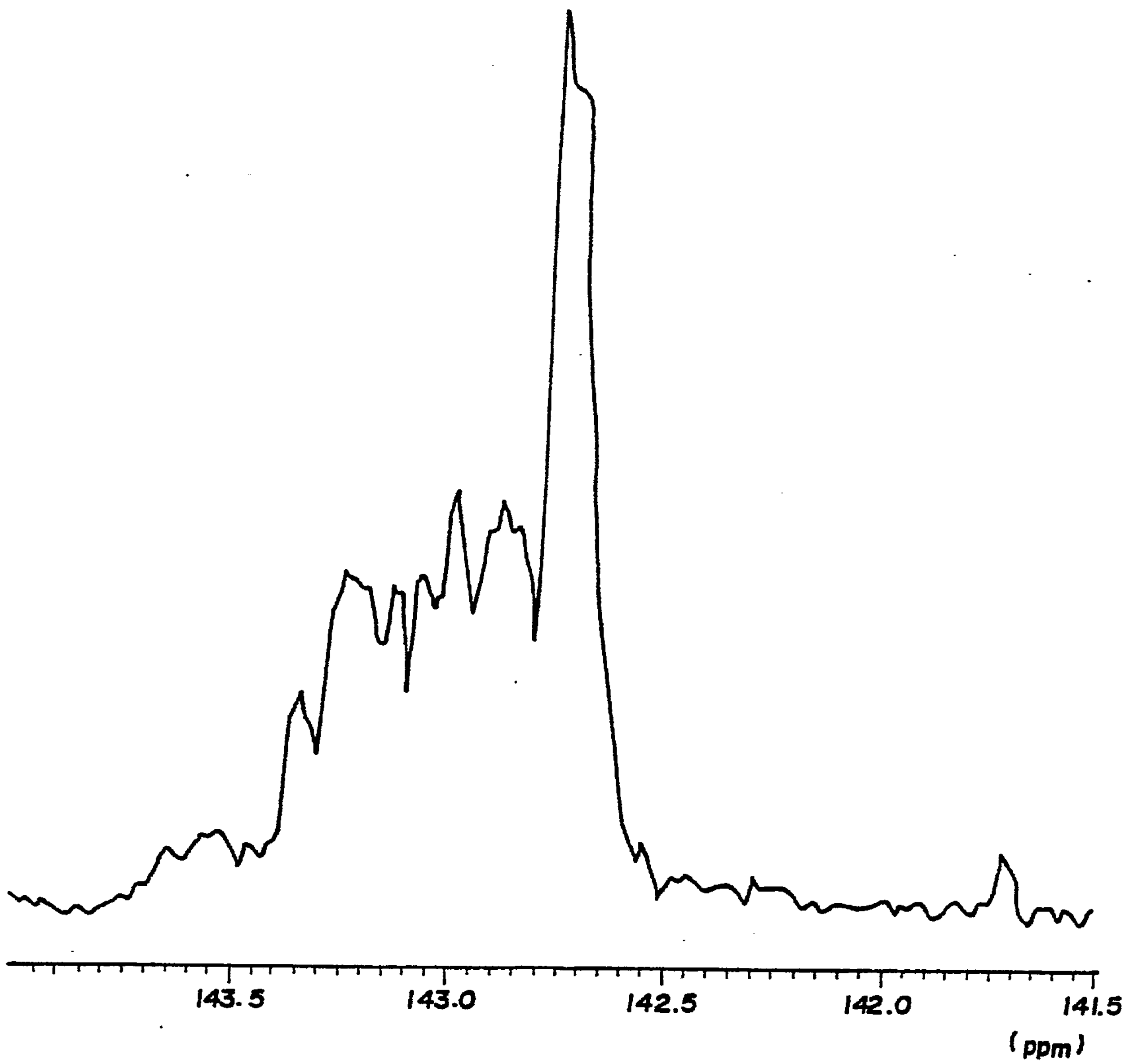

F I G. 1(i)

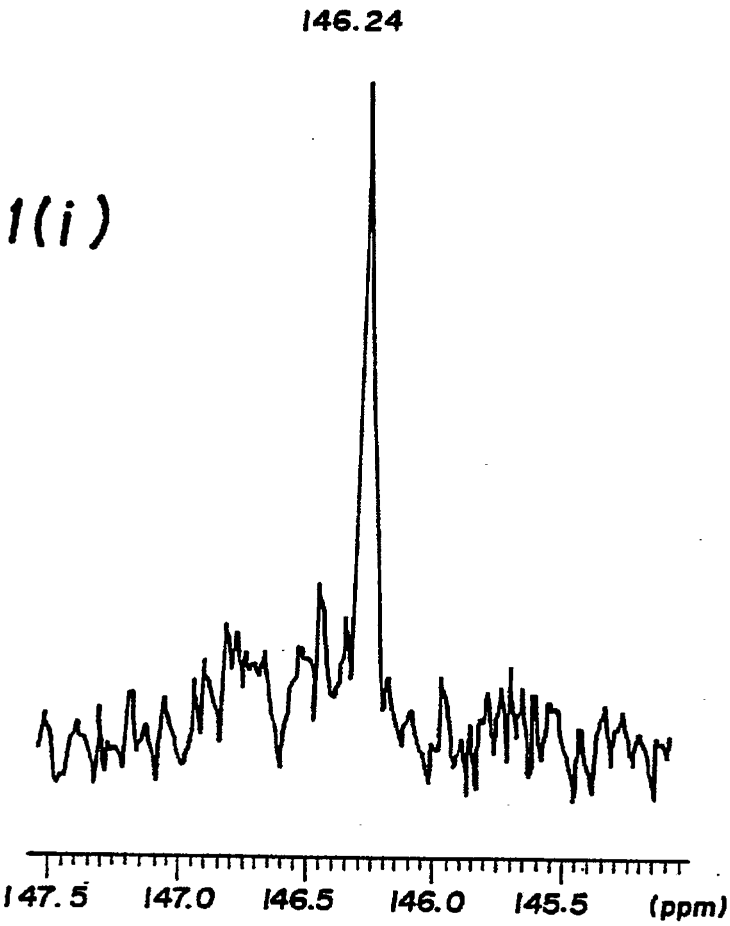
146.24
147.5
147.0
146.5
146.0
145.5
(ppm)

F I G. 1(j)

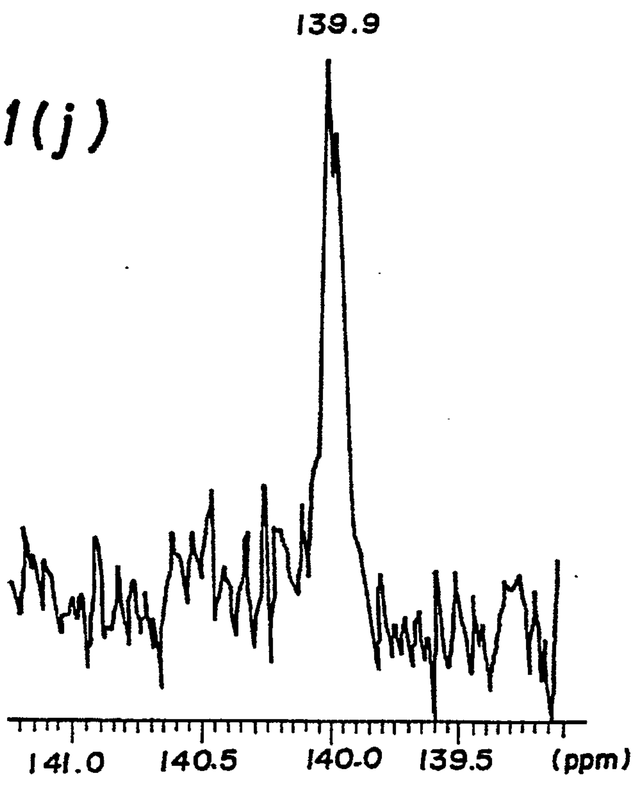
139.9
141.0
140.5
140.0
139.5
(ppm)

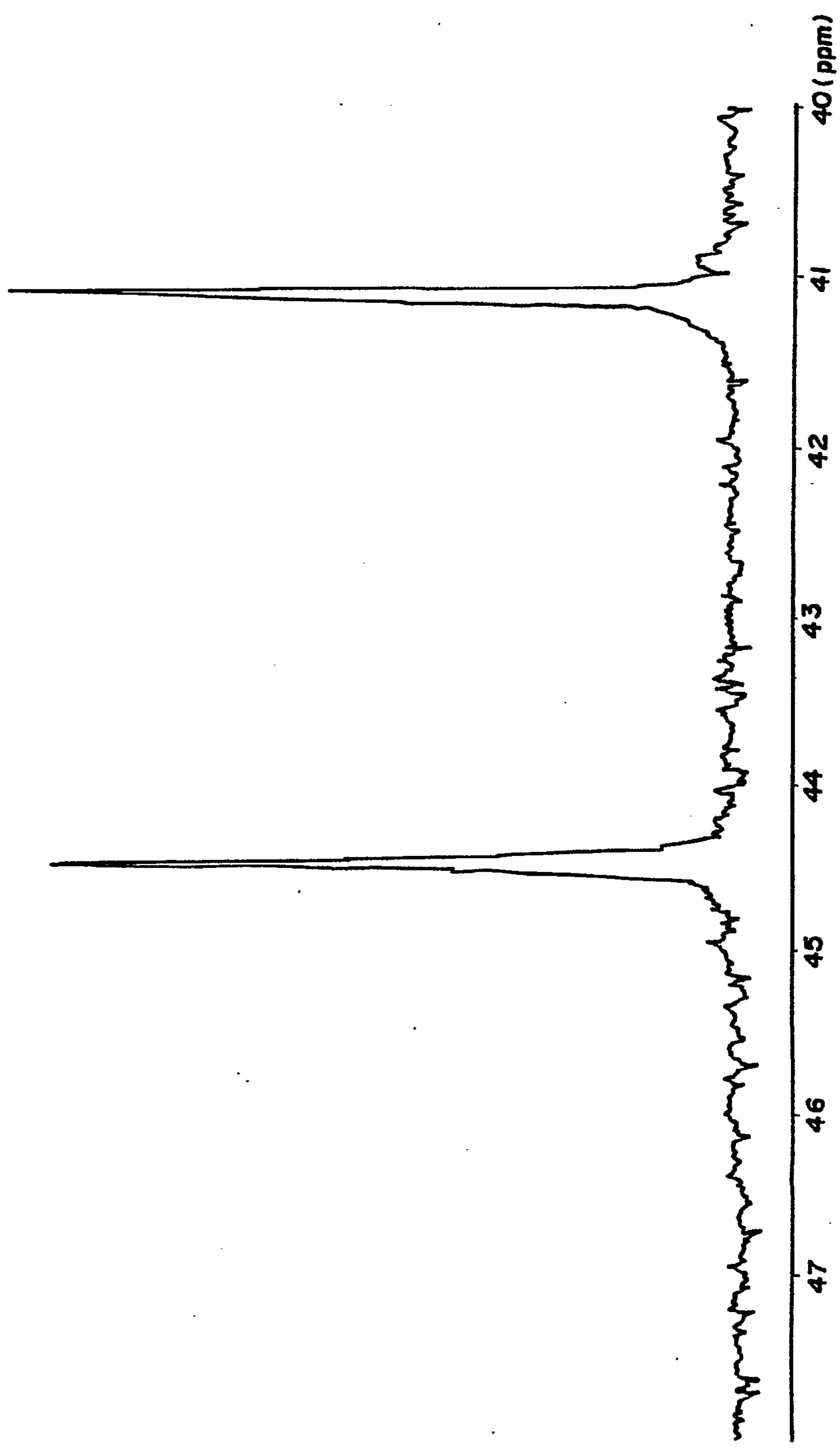


FIG. 2(a)

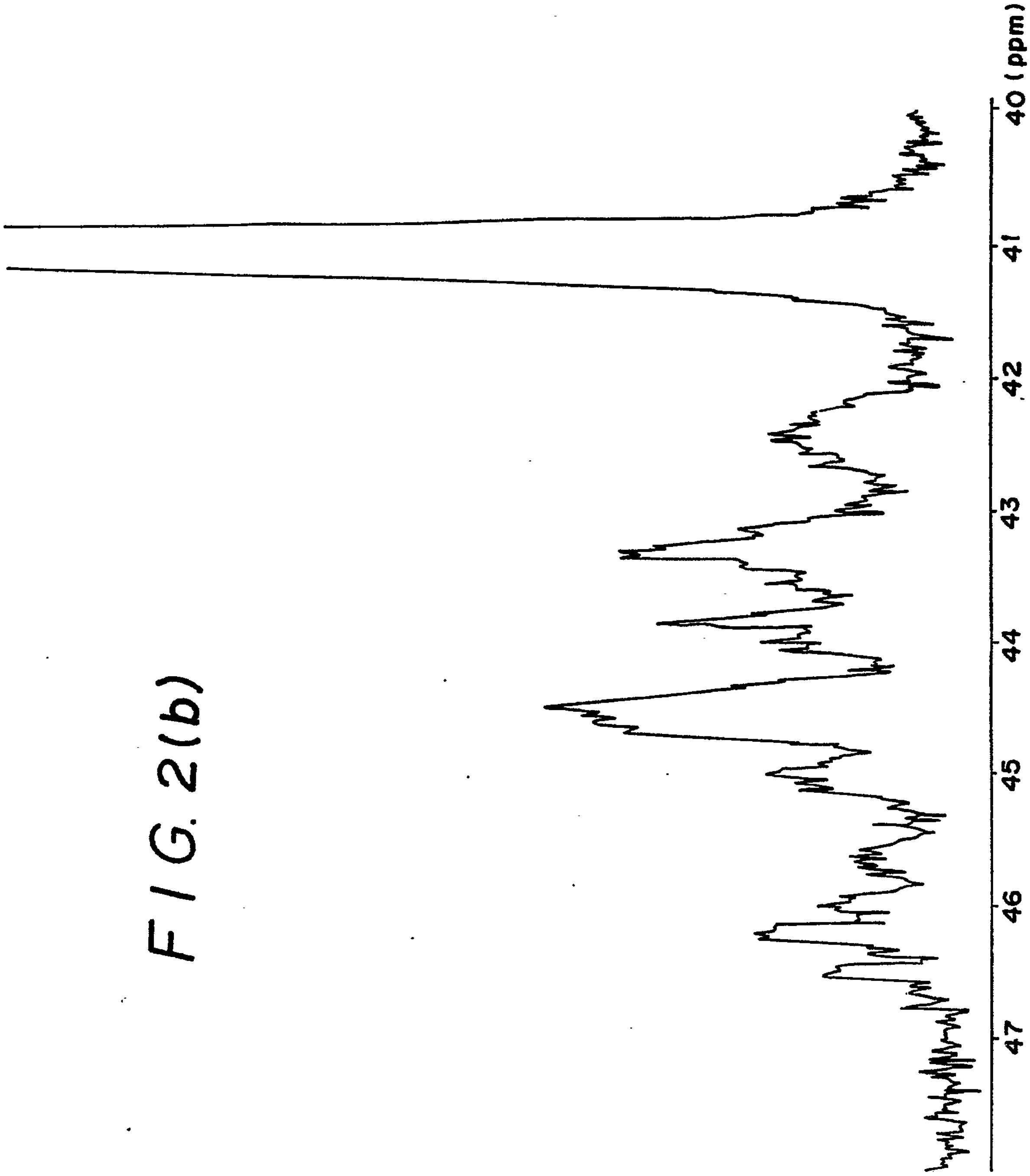


FIG. 2(b)

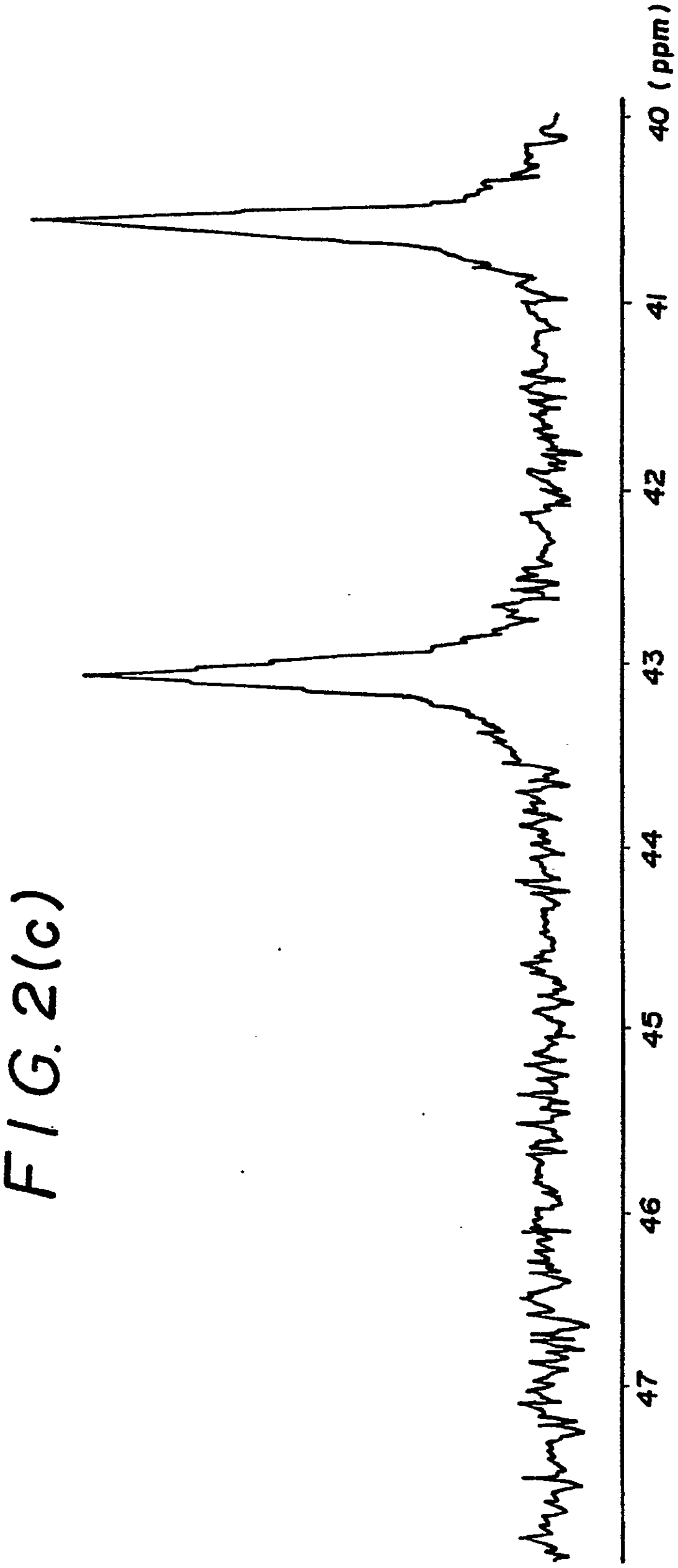


FIG. 2(c)

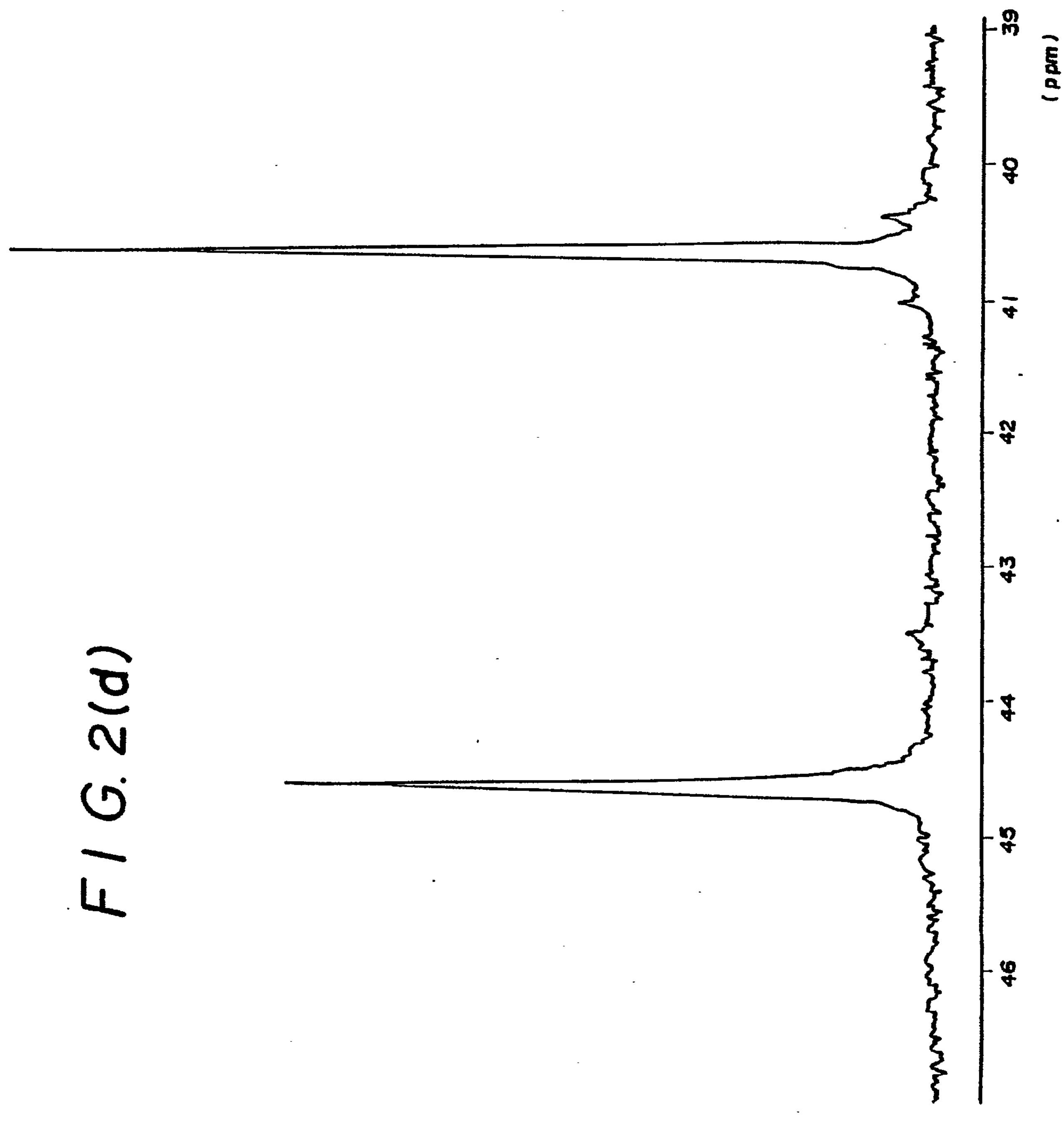


FIG. 2(d)

FIG. 3(a)

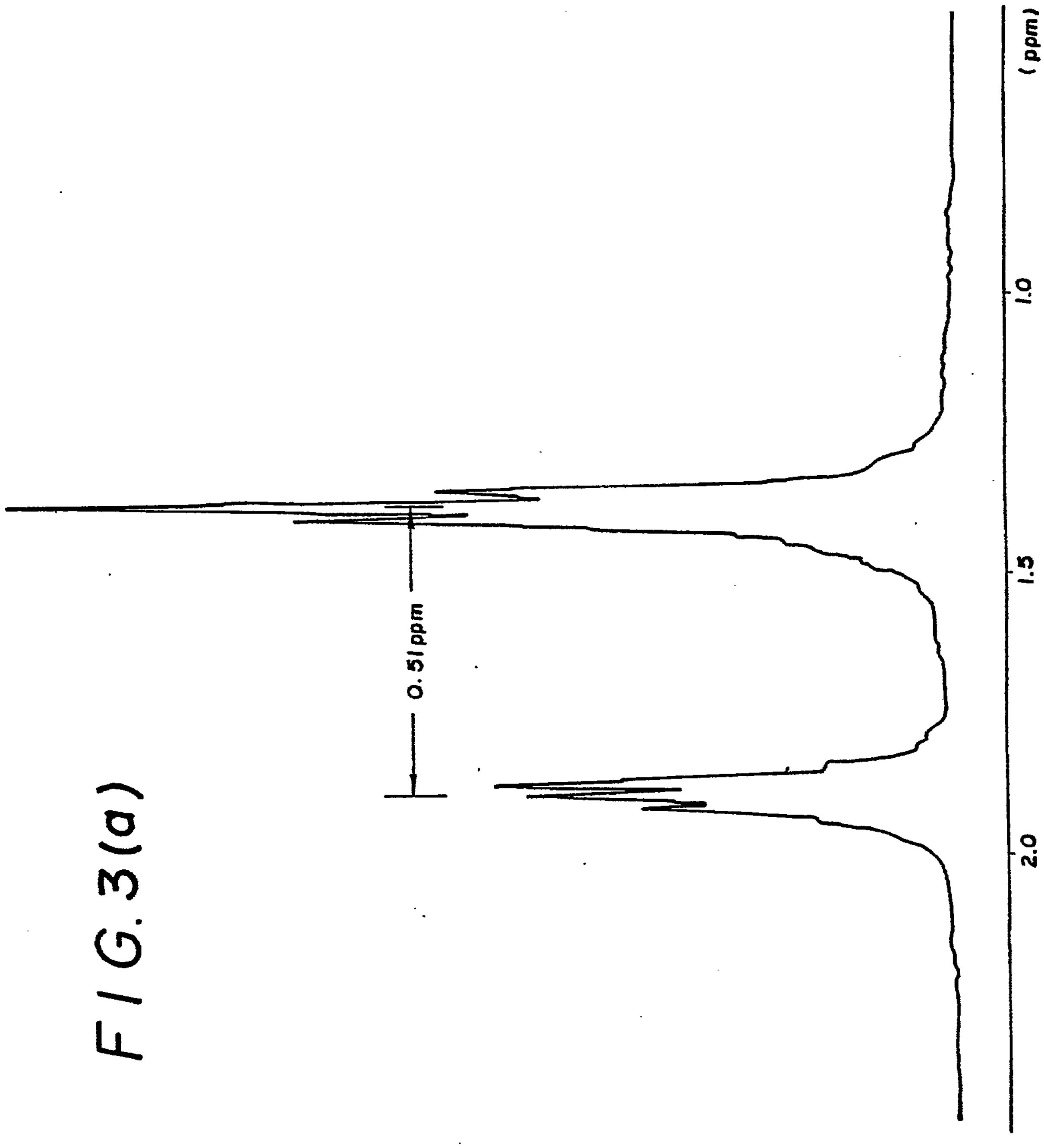

FIG. 3(b)

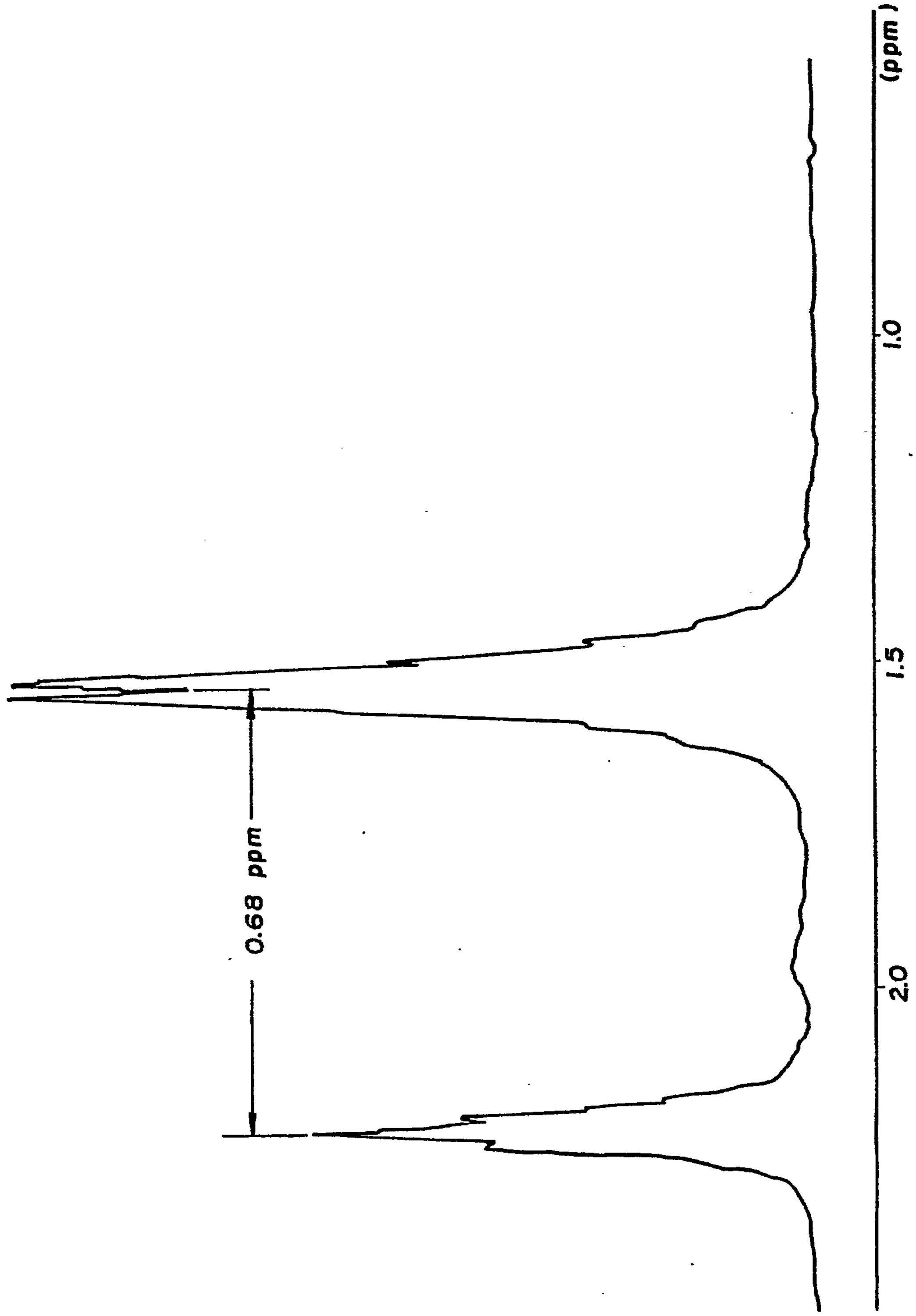

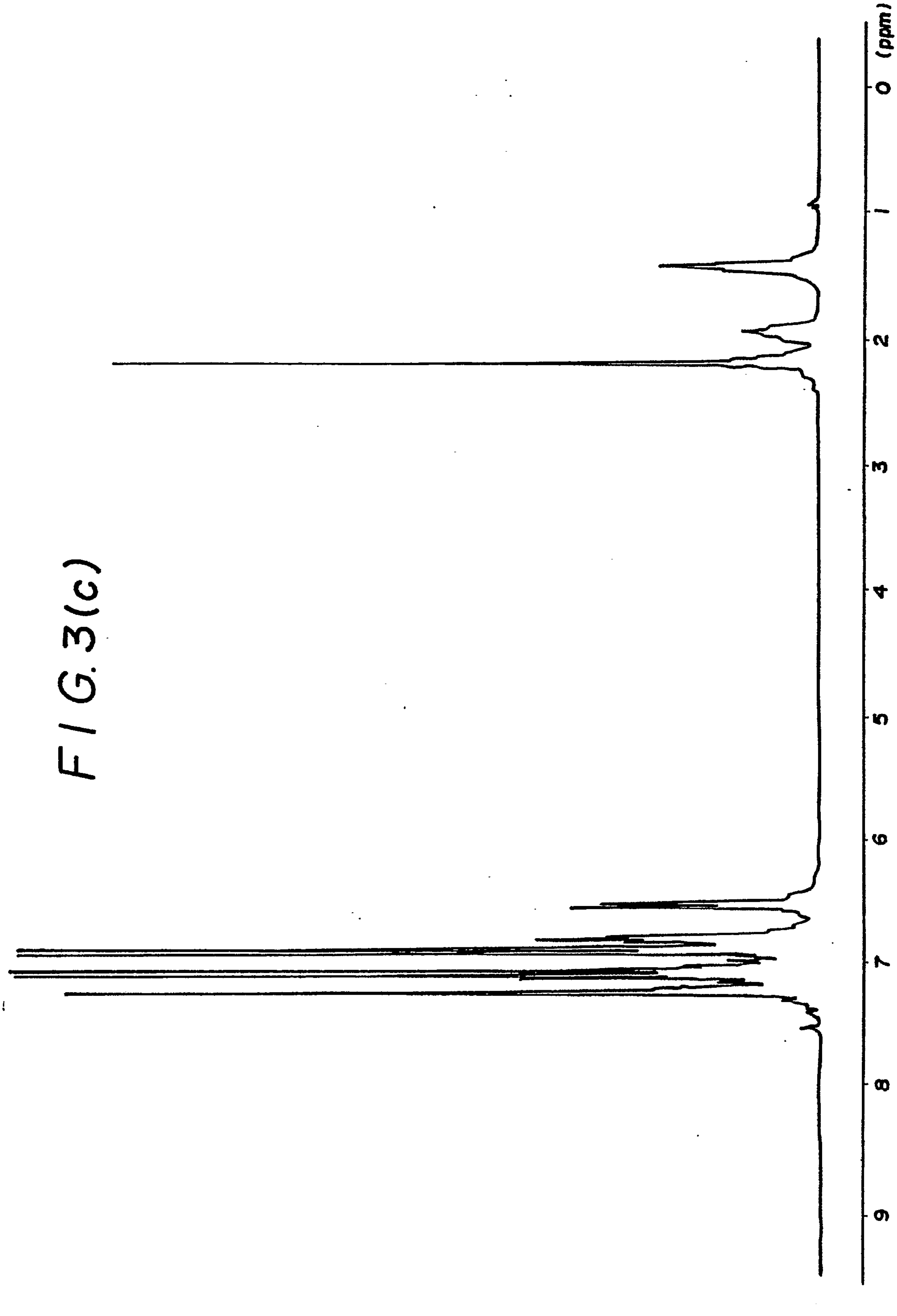


FIG. 3(c)

FIG. 4(a)

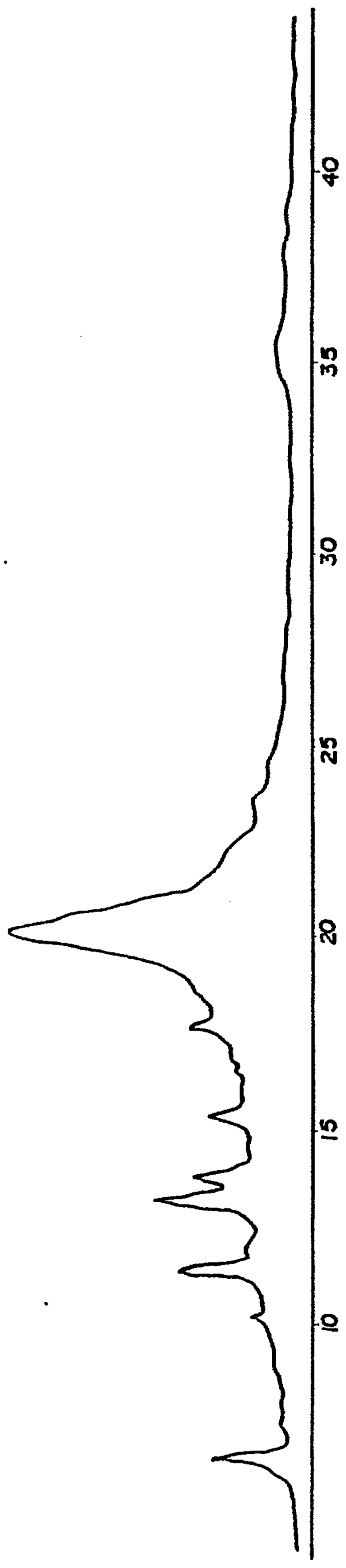


FIG. 4(b)

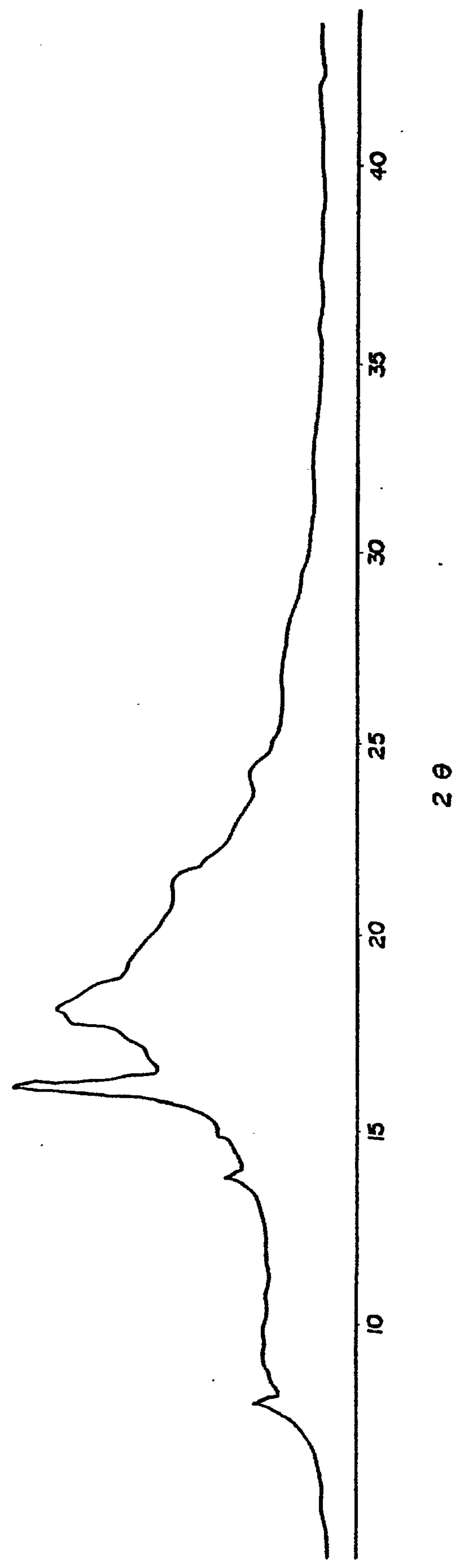

FIG. 4(c)

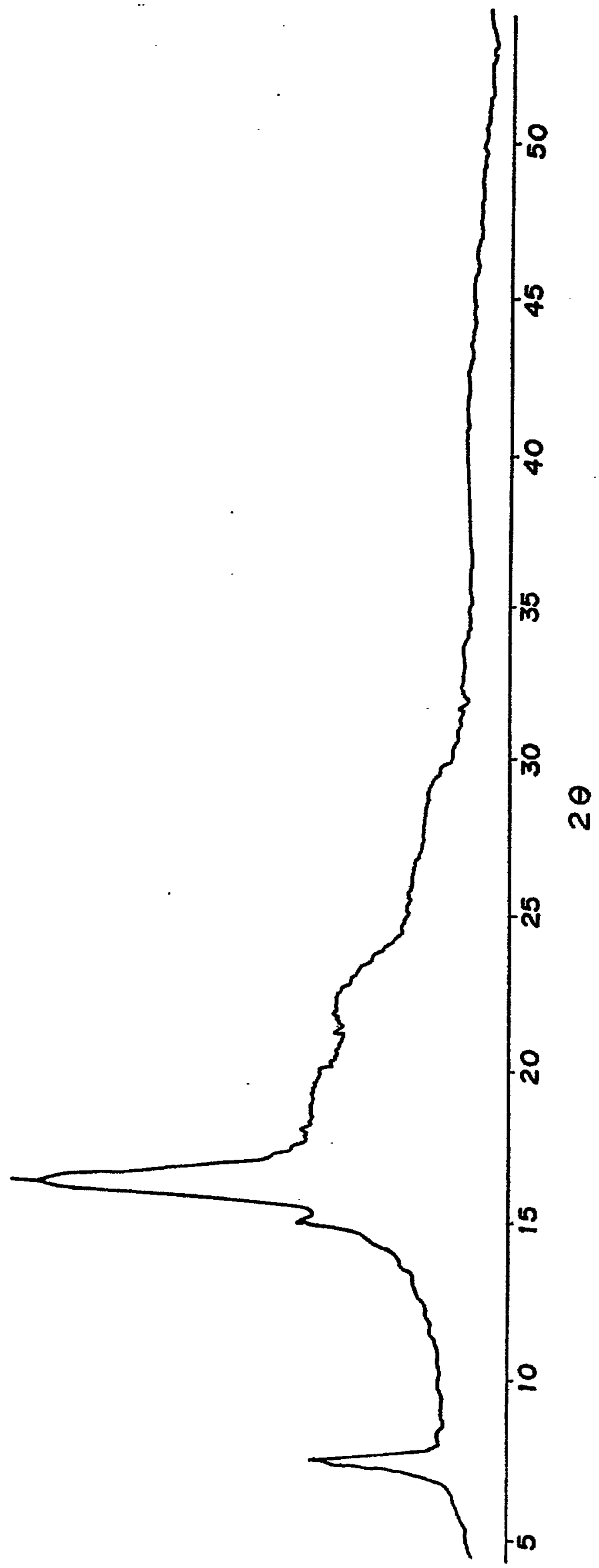

FIG. 5(a)

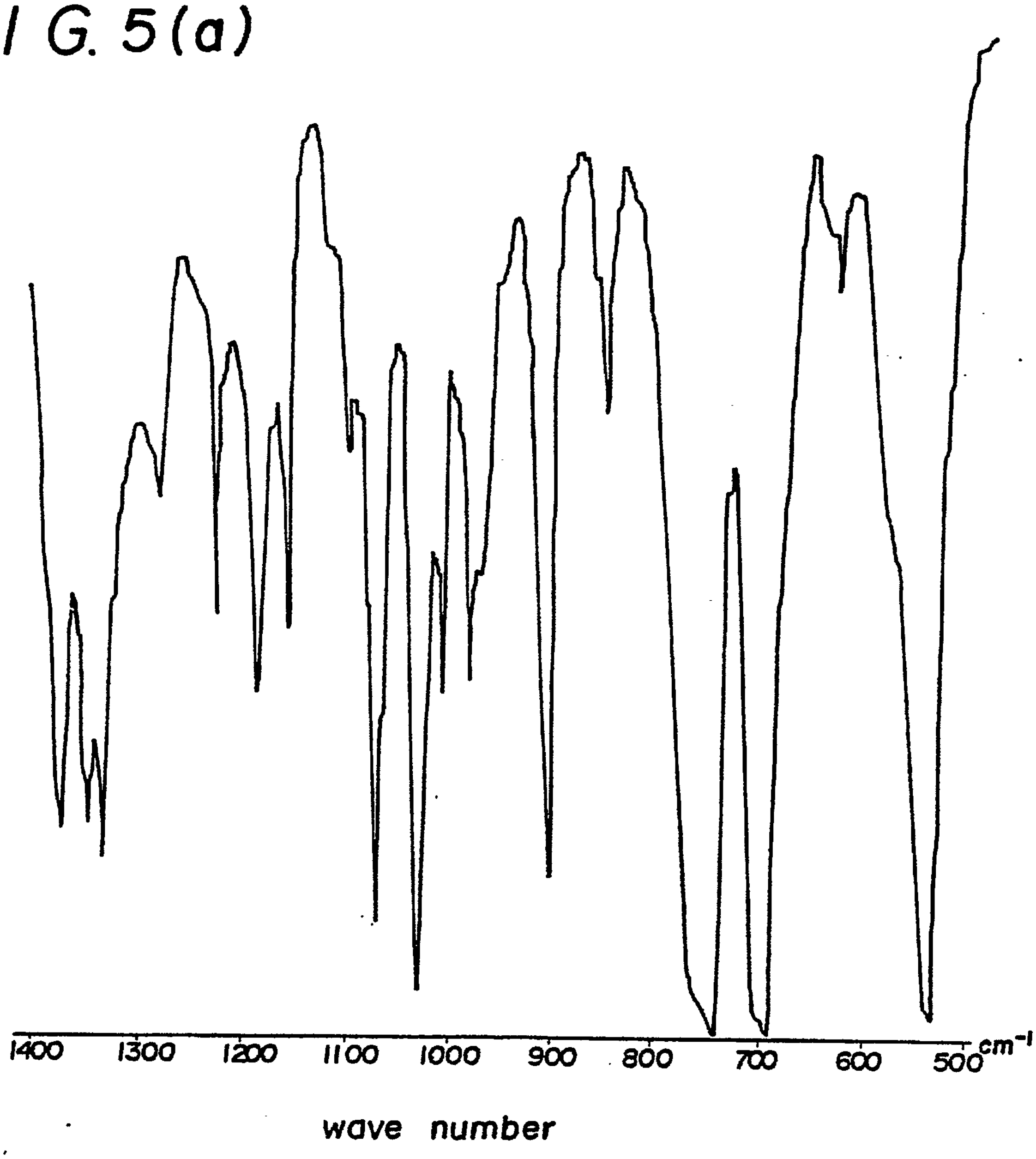

FIG. 5(b)

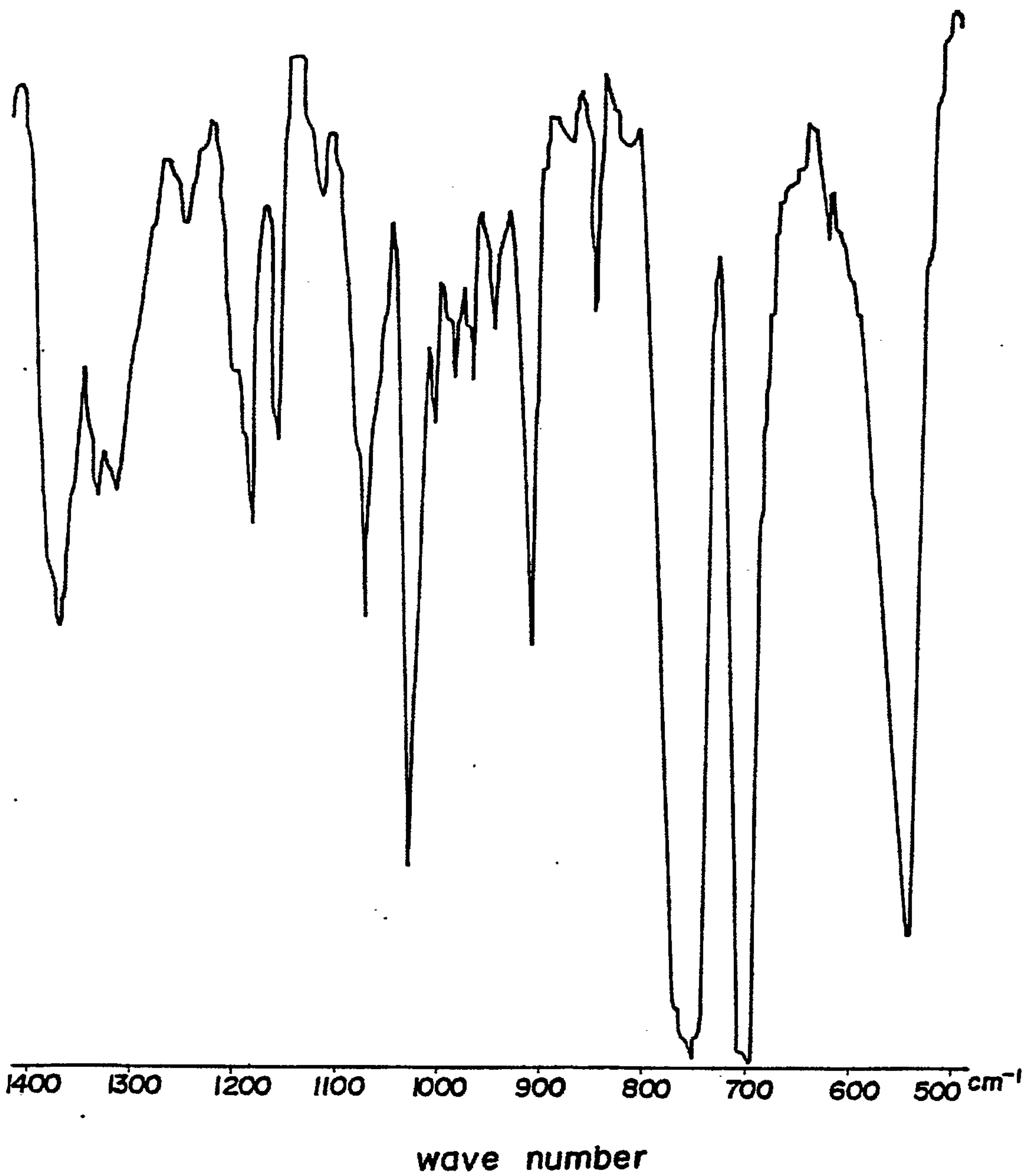

FIG. 5(c)

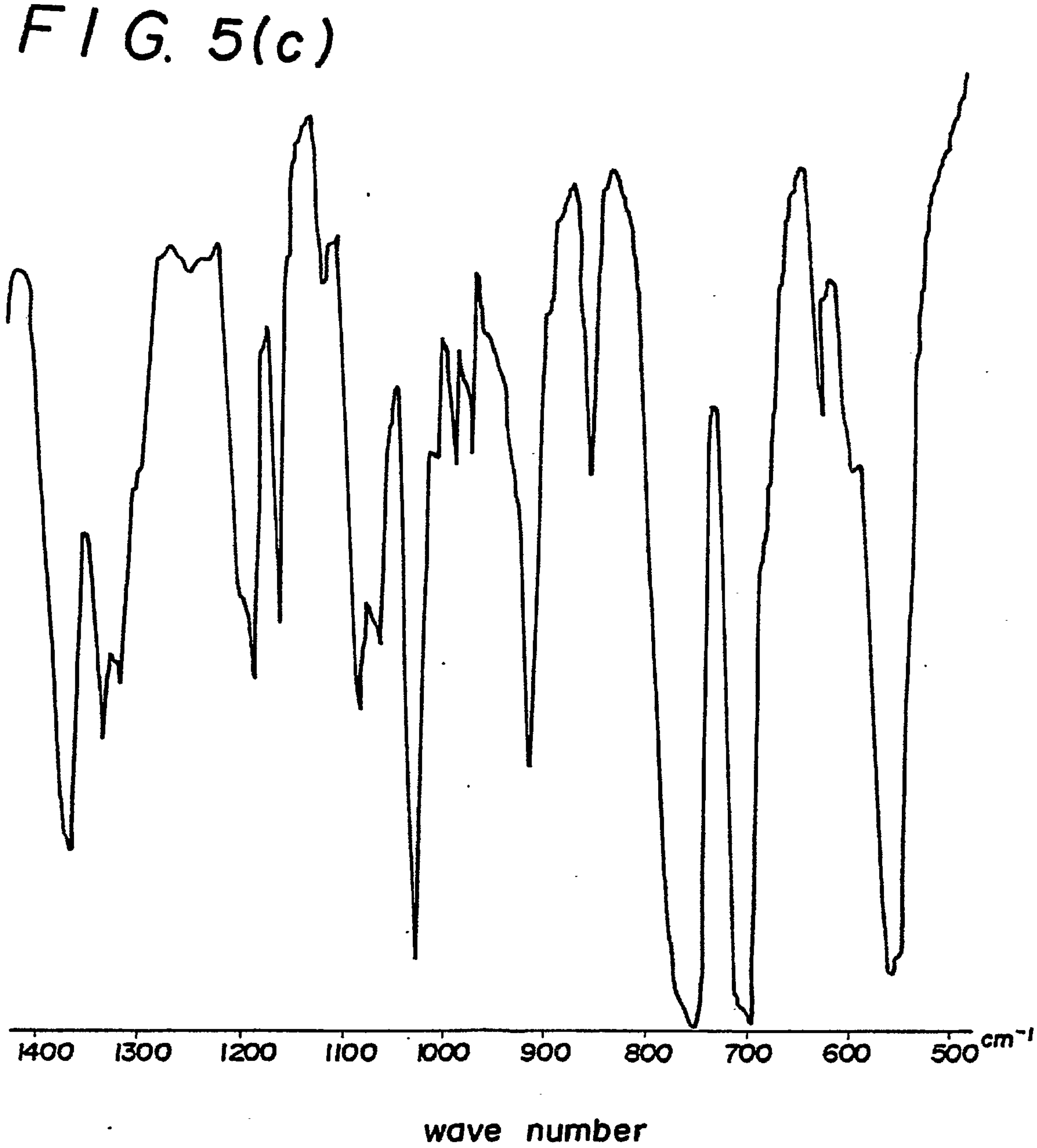

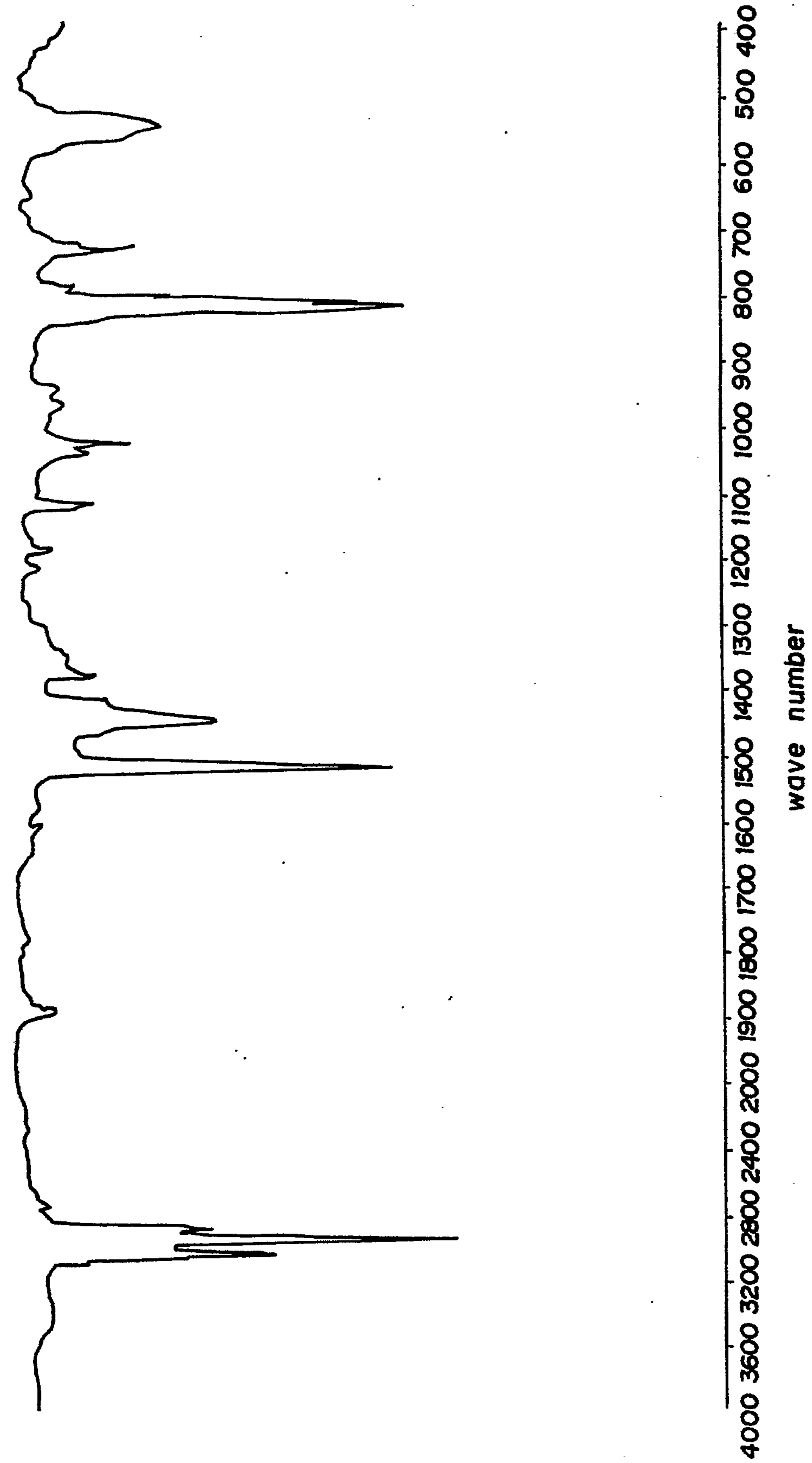
4000 3600 3200 2800 2400 2000 1900 1800 1700 1600 1500 1400 1300 1200 1100 1000 900 800 700 600 500 400
wave number

FIG. 5(d)